# EUROPÄISCHE PATENTSCHRIFT

(11) **EP 2 002 255 B1**
(45) Veröffentlichungstag und Bekanntmachung des Hinweises auf die Patenterteilung: **16.08.2017**
(21) Anmeldenummer: 07723589.3
(22) Anmeldetag: 26.03.2007
(51) Int. Cl.: G01N 30/72, G01N 1/00, G01N 33/00, H01J 49/04, G01N 1/38, B01D 59/44, B01F 3/02, B01F 15/04

(54) **VERFAHREN ZUR ANALYSE VON ISOTOPENVERHÄLTNISSEN**
METHOD FOR THE ANALYSIS OF ISOTOPE RATIOS
PROCÉDÉ D'ANALYSE DE PROPORTIONS D'ISOTOPES

(30) Priorität: 31.03.2006 DE 102006015535
(43) Veröffentlichungstag der Anmeldung: 17.12.2008
(60) Teilanmeldung: 09001928.2
(73) Patentinhaber: Thermo Fisher Scientific (Bremen) GmbH, 28199 Bremen (DE)
(72) Erfinder: HATSCHER, Deike, 28857 Syke (DE); HILKERT, Andreas, 27753 Delmenhorst (DE); SCHLÜTER, Hans-Jürgen, 28357 Bremen (DE); DUHR, Alexander, 27777 Ganderkesee (DE); KRUMMEN, Michael, 26129 Oldenburg (DE); SCHWIETERS, Johannes, 27777 Ganderkesee (DE)
(74) Vertreter: Heiland, Karsten
(86) Internationale Anmeldenummer: PCT/EP2007/002642
(87) Internationale Veröffentlichungsnummer: WO 2007/112876

(56) Entgegenhaltungen:
- EP-A2- 0 306 333
- WO-A-2004/065956
- DE-A1- 2 748 685
- DE-A1- 4 333 208
- DE-A1- 4 421 272
- DE-A1- 10 151 646
- GB-A- 2 007 357
- US-A- 4 705 669
- US-A- 5 473 951
- FESSENDEN JULIANNA E; COOK CRAIG S; LOTT MICHAEL J; EHLERINGER JAMES R: "Rapid 18O analysis of small water and CO2 samples using a continuous-flow isotope ratio mass spectrometer" RAPID COMMUNICATIONS IN MASS SPECTROMETRY, Bd. 16, Nr. 13, 15. Juli 2002 (2002-07-15), Seiten 1257-1260, XP002454604 WILEY
- BROOKS P D; GEILMANN H; WERNER R A; BRAND W A: "Improved precision of coupled 13C and 15N measurements from single samples using an elemental analyzer/isotope ratio mass spectrometer combination with a post-column six-port valve and selective CO2 trapping; improved halide robustness of the combustion reactor using CeO2" RAPID COMMUNICATIONS IN MASS SPECTROMETRY, Bd. 17, Nr. 16, 30. August 2003 (2003-08-30), Seiten 1924-1926, XP002454605 WILEY
- WERNER ROLAND A ; BRUCH BEATE A; BRAND WILLI A: "ConFlo III - an interface for high precision 13C and 15N analysis with an extended dynamic range" RAPID COMMUNICATIONS IN MASS SPECTROMETRY, Bd. 13, Nr. 13, 15. Juli 1999 (1999-07-15), Seiten 1237-1241, XP002454606 WILEY
- RÖCKMANN THOMAS ; KAISER JAN ; BRENNINKMEIJER CARL A M; BRAND WILLI A: "Gas chromatography/isotope-ratio mass spectrometry method for high-precision position-dependent 15N and 18O measurements of atmospheric nitrous oxide" RAPID COMMUNICATIONS IN MASS SPECTROMETRY, Bd. 17, Nr. 16, 30. August 1003 (1003-08-30), Seiten 1897-1908, XP002454607 WILEY
- HATHCOCK L ET AL: "A VERSATILE INTERFACE MODIFICATION FOR GC/MS ON BENCHTOP INSTRUMENTS" JOURNAL OF HIGH RESOLUTION CHROMATOGRAPHY, WILEY VCH, WEINHEIM, DE, Bd. 13, Nr. 9, 1. September 1990 (1990-09-01), Seiten 656-658, XP000161015 ISSN: 0935-6304
- LIGON W V ET AL: "ADJUSTABLE OPEN-SPLIT INTERFACE FOR GAS CHROMATOGRAPHY/MASS SPECTROMETRY PROVIDING SOLVENT DIVERSION AND INVARIANT ION SOURCE PRESSURE" ANALYTICAL CHEMISTRY, AMERICAN CHEMICAL SOCIETY. COLUMBUS, US, Bd. 63, Nr. 20, 15. Oktober 1991 (1991-10-15), Seiten 2386-2390, XP000275475 ISSN: 0003-2700

## Beschreibung

Die Erfindung betrifft ein Verfahren zur Analyse von Isotopenverhältnissen, wobei mindestens ein Probengas und/oder mindestens ein Referenzgas über mindestens eine offene Kopplung (open split) mindestens einer Analyseeinrichtung zugeführt werden und zwar mit der Möglichkeit der Zugabe von Trägergas. In einer Vorrichtung für die Zufuhr von Gasen zu mindestens einer Analyseeinrichtung, insbesondere zur Durchführung des genannten Verfahrens, ist eine offene Kopplung vorgesehen, welche eine Mischungszone und eine Wartezone aufweist, wobei in der Wartezone Kapillaren für Probengas, Trägergas und/oder Referenzgas sowie eine Kapillare für die Entnahme der Gase, insbesondere für die Zufuhr der Gase zu der Analyseeinrichtung, angeordnet sind, wobei die Kapillaren in die Mischungszone hinein bzw. an die Mischungszone heran und wieder zurück verfahrbar sind.

Eine Besonderheit von Apparaten zur Bestimmung von Isotopenverhältnissen ist, dass alle Komponenten so konstruiert sein müssen, dass keine Fraktionierungen auftreten. Diese können zum Beispiel überall dort auftreten, wo Transport durch Diffusion stattfindet.

Eine offene Kopplung als Schnittstelle zwischen einem für die Analyse von Isotopenverhältnissen geeigneten Massenspektrometer (Isotopen-Massenspektrometer bzw. IRMS) und einer Gaschromatographieeinrichtung ist beispielsweise beschrieben in der DE 43 33 208 A1. Erwähnt ist dort die Analyse von CO2 und N2 bei Verwendung von Helium als Trägergas. Die Menge des zugeführten Trägergases ist variierbar um so die Verdünnung der beiden zu analysierenden Gase aneinander anpassen zu können. Die Veränderung der Trägergasmenge erfolgt über geeignete Ventile oder durch Positionsänderung von in die offene Kopplung eintauchenden Kapillaren. Um die verschiedenen Gasströme und -mengen im Sinne der angestrebten Ergebnisse richtig einstellen zu können, bedarf es auf Seiten des Bedienungspersonals großer Erfahrung. Die Analysenergebnisse sind vom Geschick der Bedienungspersonen abhängig und schwanken mehr oder weniger zufällig.

Die DE 44 21 272 A1 beschreibt ein Doppeleinlasssystem für die Messung der Isotopenzusammensetzung gasförmiger Substanzen. Vorgesehen ist unter anderem eine offene Kopplung, in der zu analysierende Gase zusammen mit Trägergas drucklos an eine Schnüffel-Kapillare übergeben werden. Letztere führt zu einem Isotopen-Massenspektrometer. Eine Konzentrationsregelung durch Regelung der Zufuhr des Trägergases findet nicht statt.

Die DE 101 51 646 A1 offenbart ein Massenspektrometer zur Isotopenanalyse in Verbindung mit der Chromatographiesäule. Eine offene Kopplung ist nicht gezeigt.

Die WO 2004/065956 A1 offenbart eine Vorrichtung zum Koppeln eines Chromatographen mit einem Massenspektrometer. Die Vorrichtung kann eine offene Schnittstelle oder eine geschlossene Schnittstelle enthalten. Stromabwärts des Chromatographen ist eine Einstellung der Durchflussmenge vorgesehen.

Der Aufsatz von Fessenden et al. "Rapid 18O analysis of small water and CO2 samples using a continuous-flow isotope ratio mass spectrometer", Rapid Communications in Mass Spectrometry, Bd. 16, Nr. 13, 15. Juli 2002 (2002-07-15), Seiten 1257-1260, XP002454604, Wiley, offenbart eine offene Kopplung zwischen einem Element-Analysator und einem Massenspektrometer. Aus zwei Quellen wird Trägergas durch die offene Kopplung geleitet, nämlich zum einen vom Element-Analysator kommend, und zum anderen von oben in ein dünnes Einsatzröhrchen. Eine Trägergas-Regelung ist nicht angesprochen.

Eine offene Kopplung zwischen einem Element-Analysator und einem Massenspekrometer zeigt auch die Veröffentlichung von Brooks et al. "Improved precision of coupled 13C and 15N measurements from single samples using an elemental analyzer/isotope ratio mass spectrometer combination with a post-column six-port valve and selective CO2 trapping; improved halide robustness of the combustion reactor using Ce02", Rapid Communications in Mass Spectrometry, Bd. 17, Nr. 16, 30. August 2003 (2003-08-30), Seiten 1924-1926; XP002454605, Wiley. Im Bereich der offenen Kopplung erfolgt eine Verdünnung des Probengases.

Die Veröffentlichung von Werner et al. " ConFlo III - An Interface for high precision 13C and 15N analysis with an extended dynamic range", Rapid Communications in Mass Spectrometry, Bd. 13, Nr. 13, 15. Juli 1999 (1999-07-15), Seiten 1237-1241, XP002454606, Wiley, offenbart eine offene Kopplung zwischen einem Element-Analysator und einem Isotopen-Massenspektrometer. Gezeigt ist die Verdünnung mit Helium im Bereich der offenen Kopplung. Vorgesehen ist lediglich ein Ein- oder Ausschalten der Verdünnung.

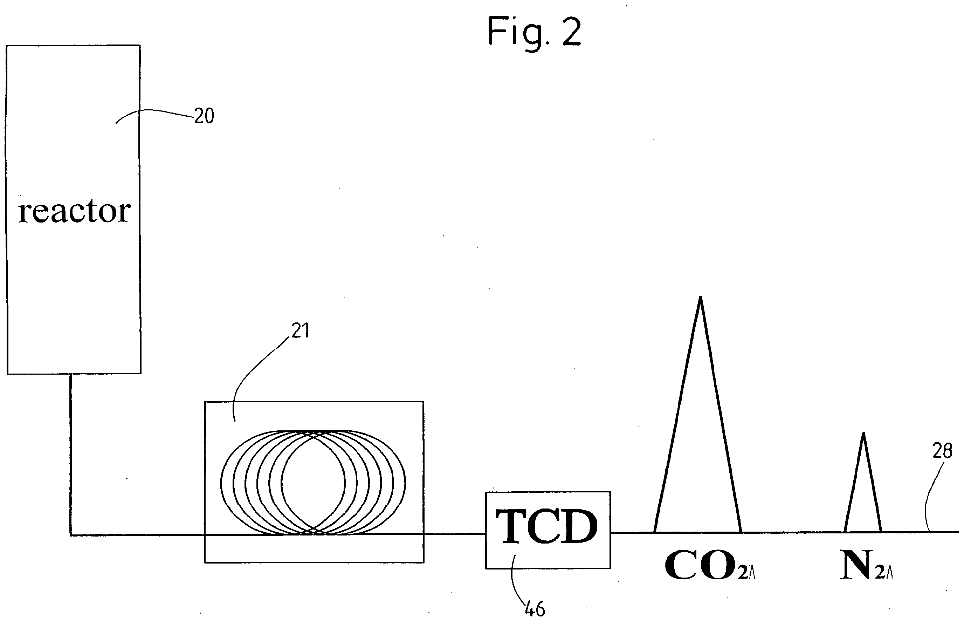

Die Veröffentlichung von Röckmann et al. "Gas chromatography/isotope-ratio mass spectrometry method for high-precision position-dependent 15N and 180 measurements of atmospheric nitrous oxide", Rapid Communications in Mass Spectrometry, Bd. 17, Nr. 16, 30. August 1003 (1003-08-30), Seiten 1897-1908, XP002454607, Wiley, zeigt eine Anordnung zur Verbindung eines Gaschromatographen mit einem Isotopen-Massenspektrometer. In Fig. 2 erkennbar ist eine offene Kopplung mit einer Schnüffelleitung zum Massenspektrometer MS.

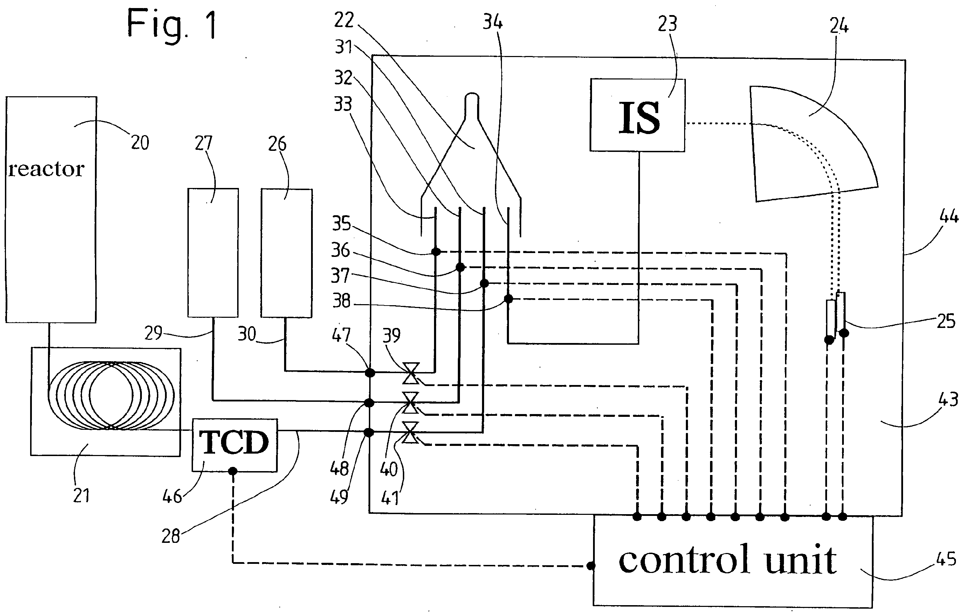

Die EP 0 306 333 A2 offenbart eine Einrichtung für die Zufuhr von Proben zu einem Isotopen-Massenspektrometer. In Fig. 1 sind zwei offene Kopplungen gezeigt, je eine für die Zufuhr des Probengases und eine für die Zufuhr von Referenzgas. Jeder offenen Kopplung ist ein Eingang für Trägergas vorgeordnet. Ebenfalls vorgeordnet ist jeweils eine "sample loop". In dieser wird Probengas bzw. Referenzgas zwischengespeichert und dann mit Hilfe des Trägergases der offenen Kopplung zugeführt, also stoßweise.

Die US 4,705,669 offenbart einen Gas-Analysator zur simultanen Bestimmung von mindestens zwei verschiedenen Gasen in einer Gasprobe. Eine massenspektrometrische Analyse ist nicht angesprochen.

Die GB 2 007 357 A offenbart eine Einrichtung, in der eine in flüssiger Form vorliegende Probe mittels der Atomabsorptionsspektroskopie analysiert wird.

Aufgabe der vorliegenden Erfindung ist die Verbesserung des eingangs genannten Verfahrens zur Analyse von Isotopenverhältnissen. Insbesondere sollen die Analyseergebnisse noch genauer die tatsächlichen Verhältnisse widerspiegeln.

Das erfindungsgemäße Verfahren ist dadurch gekennzeichnet, dass die Konzentration des in die Analyseeinrichtung gelangenden Probengases und/oder Referenzgases geregelt wird durch die Zufuhr des jeweiligen Trägergases. Konkret vorgesehen sind eine computergesteuerte Regelung mittels Rückkopplung anhand von Sensordaten oder eine automatische Anpassung der Signalintensitäten von Referenz und Probe durch eine computergesteuerte Regelung.

Vorgesehen ist eine computergesteuerte Regelung, mit der Möglichkeit zur Rückkopplung anhand von Sensordaten und/oder der Wiederholung früher bereits verwendeter Parameter. Der Begriff der Regelung ist hier grundsätzlich weit auszulegen und soll eine Einstellung oder Steuerung ohne Rückkopplung sowie eine Regelung im engeren Sinn mit Rückkopplung (wie in der Automatisierungstechnik) mit einbeziehen. Die Regelung kann durch Software oder Hardware realisiert werden. Vorzugsweise handelt es sich um eine programmgesteuerte Regelung. Geregelt werden zumindest als solche bekannte Stellglieder für das Trägergas, beispielsweise elektronisch regelbare Ventile und/oder Aktuatoren für in die offene Kopplung eintretende Kapillaren. Die Regelung beinhaltet auch die Möglichkeit die Trägergaszufuhr bis auf null herabzuregeln. Außerdem können Probengase und Referenzgase bereits vor Eintritt in die offene Kopplung Trägergas enthalten (vorgemischte Gase).

Als Analyseeinrichtung ist vorzugsweise ein Massenspektrometer, insbesondere ein für die Isotopenverhältnismessung geeignetes Massenspektrometer (IRMS) vorgesehen. Die Erfindung ist aber nicht hierauf beschränkt. Es können auch andere, beispielsweise optische Analysatoren, Spektrometer, Interferometer, Spektralanalysatoren usw. verwendet werden.

Eine vorteilhafte Weiterbildung der Erfindung sieht vor, dass die offene Kopplung für mindestens eines der Gase - Probengas, Trägergas, Referenzgas - Kapillaren mit unterschiedlichen wirksamen Flussraten aufweist, und dass der Gasstrom geregelt wird durch Auswahl und Aktivierung der Kapillare mit der gewünschten Flussrate. Zusätzlich oder alternativ kann vorgesehen sein, dass die Gasströme auch noch auf andere Weise geregelt werden, etwa durch regelbare Ventile. Es besteht dann die Möglichkeit, dass zunächst eine grobe Regelung anhand der Auswahl einer bestimmten Kapillare und zusätzlich eine feine Regelung durch ein entsprechendes Stellglied erfolgt. Die unterschiedlichen wirksamen Flussraten der einzelnen Kapillaren können sich ergeben beispielsweise durch unterschiedliche Querschnitte oder Längen der Kapillaren oder durch definierte Querschnittsverengungen etwa an Endstücken der Kapillaren. Für jedes Gas können auch mehrere Kapillaren vorgesehen sein.

Vorteilhafterweise wird ausschließlich der Zufluss des jeweiligen Trägergases geregelt, während die übrigen Gasströme ungeregelt bleiben. Diese Maßnahme vereinfacht den apparativen Aufbau und den schaltungstechnischen bzw. programmtechnischen Aufwand innerhalb der Regelung.

Vorteilhafterweise wird die Trägergaszufuhr stufenweise geändert, wobei auch zueinander parallele Trägergasteilströme gleicher oder unterschiedlicher Höhe aktivierbar und miteinander kombinierbar sind zur Einstellung eines resultierenden Trägergasstroms.

Vorteilhafterweise wird der Zufluss des jeweiligen Trägergases so geregelt, dass die Konzentration des Probengases und/oder Referenzgases im Wesentlichen konstant, zumindest in einem für die Analyseeinrichtung optimalen Messbereich bleibt. Der Volumenstrom des Probengases schwankt in Abhängigkeit von der verwendeten Quelle. Bekannt ist beispielsweise die Zufuhr von Gas aus einem Gaschromatographen oder einem Elementanalysator. Dabei unterliegt die Probenmenge im durch die Probenkapillare in die offene Kopplung einströmenden Gasstrom Schwankungen. Diese können durch entsprechenden Zufluss von Trägergas ausgeglichen werden, so dass das Probengas stets in einer für die Analyseeinrichtung optimalen Konzentration gelangt. Analog gilt dies für das Referenzgas.

Für viele Anwendungen, insbesondere für die korrekte Verdünnung der Referenzgase, ist es sinnvoll die Beziehung zwischen Verdünnungssteuerung und Analysatorsignal im Vorfeld aufzuzeichnen und dann im Messverlauf direkt die vorher kalibrierten Einstellungen zu verwenden. Dies ist besonders effizient im Zusammenhang mit der weiter unten erörterten erfindungsgemäßen inkrementellen Flussregelung/Steuerung. So kann ein Nachregeln während des eigentlichen Messprozesses komplett eliminiert werden.

Eine vorteilhafte Weiterbildung der Erfindung sieht vor, dass der Zufluss des jeweiligen Trägergases während einer kontinuierlichen alternierenden Messung so geregelt wird, dass Probengas und Referenzgas im Analysator Signale von im Wesentlichen gleicher Intensität liefern. Üblicher Weise werden Probengas und Referenzgas abwechselnd mit Trägergas dem Analysator zugeführt. Zur Reduzierung von Messungenauigkeiten wird der Trägergaszufluss während der Probengasmessung und/oder der Referenzgasmessung so geregelt, dass möglichst die gleiche Signalstärke im Analysator ankommt. Bei Verwendung eines Massenspektrometes bedeutet dies eine Zufuhr von Trägergas derart, dass Probengas und Referenzgas nahezu dieselbe Anzahl an Treffern je Zeiteinheit am Detektor des Massenspektrometers ergeben. Dabei kann eine Rückkopplung der Intensität vorgesehen sein, um so den Zufluss des Trägergases zu regeln.

Vorteilhafterweise werden die Konzentration des Probengases aus der vom Analysator durchgeführten Messung abgeleitet und das Ergebnis der Messung für die Zuflussregelung des jeweiligen Trägergases verwendet. In den Regelkreis eingebunden ist bei dieser Ausführung das Messergebnis der Analysators. Darauf basierend kann der Zufluss des Trägergases für das Probengas und/oder das Referenzgas geregelt werden, auch für anschließende Messungen.

Vorteilhafterweise wird die Konzentration des Probengases aus einer Konzentrationsmessung vor Eintritt des Probengases in den Analysator abgeleitet, insbesondere vor Eintritt in die offene Kopplung, und das Ergebnis der Messung für die Zuflussregelung des Trägergases verwendet. Es handelt sich dabei um eine Alternative oder Ergänzung für die unmittelbar zuvor genannte Regelung.

In Fortbildung der Erfindung kann vorgesehen sein, dass die Konzentration des Probengases aus der thermischen Leitfähigkeit abgeleitet wird. Hierfür geeignete Detektoren sind bekannt und können relativ einfach in den Regelkreis für die Zuflussregelung des Trägergases eingebunden werden.

Vorteilhafterweise arbeitet die offene Kopplung nach dem Gleichstromprinzip. Dies erleichtert den apparativen Aufbau bei der Durchführung des Verfahrens und die Beherrschung der strömungstechnischen Parameter.

Nach einem weiteren Gedanken der Erfindung können der offenen Kopplung zwei oder mehr Probengase zugeführt werden, wobei für jedes Probengas der Zufluss des Trägergases geregelt wird. Auf diese Weise sind auch die Messungen verschiedener Probengase miteinander vergleichbar. Die Bereithaltung und Einrichtung mehrerer offener Kopplungen kann so vermieden werden.

In Fortbildung der Erfindung kann vorgesehen sein, dass das Probengas vor Eintritt in die offene Kopplung geteilt wird auf zwei oder mehr Teilgasströme, die der offenen Kopplung zugeführt werden. Vorzugsweise wird das Probengas auf zwei oder mehr Kapillaren verteilt, die parallel zueinander in die offene Kopplung eintreten. Die Teilgasströme in den verschiedenen Kapillaren können so vor Eintritt in die offene Kopplung auf unterschiedliche Weise beeinflusst werden, etwa chemisch oder physikalisch verändert werden. Auch ist die Verwendung unterschiedlicher Kapillaren möglich.

Vorteilhafterweise wird mindestens einer der Teilgasströme vor Eintritt in die offene Kopplung durch eine Falle geleitet, sodass eine in diesem Teilgasstrom enthaltende Komponente oder Substanz zumindest teilweise zurückgehalten wird. Beispielsweise kann ein Probengas, welches CO2 und N2 gemeinsam enthält durch eine Ascarit-Falle geleitet werden, welche das bei der N2-Messung störende CO2 festhält. CO2 hat die unangenehme Eigenschaft durch einen langen Nachlauf auch nachfolgende N2-Messungen zu stören. Mit dem erfindungsgemäßen Verfahren ist es möglich einen Teilgasstrom zu erzeugen, der in diesem Fall frei von CO2 ist und eine qualitativ hochwertige Messung von N2 erlaubt.

Um zwischen zwei chromatographischen Peaks Zeit zu gewinnen - beispielsweise für eine Messung des passenden Referenzgases - kann gegebenenfalls eine Verzögerungsschleife - beispielsweise in Form einer geeignet langen Kapillare zugeschaltet werden.

Das Verfahren ist vorgesehen zur Analyse der Isotopenverhältnisse leichter und mittelschwerer Elemente. Probengas sind insbesondere Verbindungen dieser Elemente, die sich in die Gasphase überführen lassen, z. B.: H2, CO2, CO, N2, SO2, N2O, NO, SF6, SF3, SO, Cl2, Edelgase. Bevorzugt sind Verbindungen von H, C, N, O, S, Cl, insbesondere H2, CO2, CO, N2.

Nach einem weiteren Gedanken der Erfindung ist vorgesehen, dass das Probengas und das Referenzgas über verschiedene offene Kopplungen und mit oder ohne Trägergas der Analyseeinrichtung zugeführt werden. Bei dieser Alternative wird demnach das Probengas über eine andere offene Kopplung zugeführt als das Referenzgas. Beiden offenen Kopplungen ist Trägergas zum Mischen und Verdünnen zuführbar.

Vorteilhafterweise wird die Zufuhr von Trägergas in mindestens eine der beiden offenen Kopplungen geregelt durch Aufteilung des Trägergasstromes auf mehrere parallele Teilgasströme, von denen einer oder mehrere ausgewählt und der offenen Kopplung zugeführt werden. Die Teilgasströme können parallel nebeneinander in die offene Kopplung gelangen oder aber zuvor zusammengeführt werden zu einem einzigen, in die offene Kopplung eintretenden Trägergasstrom. Durch Blockieren oder Durchlassen der einzelnen Teilgasströme kann ein resultierender Trägergasstrom mit gewünschter Flussrate eingestellt werden.

Vorzugsweise sind einige oder alle parallelen Teilgasströme unterschiedlich groß. Dies ermöglicht eine besonders große Anzahl an Variationen beim Einstellen des resultierenden Trägergasstroms.

Nach einem weiteren Gedanken der Erfindung wird das Probengas vor der Zufuhr in die offene Kopplung aufgeteilt in einen zur offenen Kopplung führenden Strom und einen hiervon abgeteilten Strom, der nicht der offenen Kopplung zugeführt wird. Auf diese Weise kann ein zu hoher Probengasstrom reduziert werden auf eine geringere Flussrate, so dass in der offenen Kopplung nur noch der gewünschte Probengasstrom ankommt.

Die erfindungsgemäße Vorrichtung ist dadurch gekennzeichnet, dass zwei oder mehr Kapillaren für Probengase vorgesehen sind, und dass die Kapillaren jeweils einen eigenen Antrieb für die Bewegung zwischen Mischungszone und Wartezone aufweisen. Mit der Vorrichtung können so mehrere Proben zugleich und/oder unter gleichen apparativen Bedingungen einem oder mehrerer Analysatoren bzw. Analyseeinrichtungen zugeführt werden. Die vor der Durchführung von Messungen üblichen Kalibrierungen können so erheblich vereinfacht werden, da im günstigsten Fall nur noch mit einer offenen Kopplung gearbeitet wird. Vorzugsweise sind sowohl für Referenzgase als auch Probengase mehrere Kapillaren in der offenen Kopplung vorgesehen, gegebenenfalls auch mehrere Kapillaren für verschiedene Trägergase.

Vorteilhafterweise sind die Antriebe für die Kapillaren Aktuatoren. Dabei sind die Antriebe für die Kapillaren von einer gemeinsamen zentralen Steuereinheit ansteuerbar, so dass die Kapillaren computergestützt verfahrbar sind und sich nur die benötigten Kapillaren in der Mischungszone befinden, während die nicht benötigten Kapillaren in der Wartezone geparkt sind.

Nach einem weiteren Gedanken der Erfindung weist die Wartezone einen größeren Querschnitt auf als die Mischungszone. Der größere Querschnitt der Wartezone ist für die Aufnahme der vielen Kapillaren günstig. Der kleinere Querschnitt der Mischungszone verkürzt die Totzeiten beim Überströmen und Vermischen der Gase, da mit dem kleineren Querschnitt der Mischungszone auch deren Volumen deutlich reduziert ist.

Vorteilhafterweise ist der Querschnitt der Wartezone mindestens zweimal so groß wie der Querschnitt der Mischungszone, vorzugsweise mindestens fünfmal so groß. Je nach Anzahl und Platzbedarf der Kapillaren kann das Querschnittsverhältnis auch noch deutlich größer sein.

Nach einem weiteren Gedanken der Erfindung weist die offene Kopplung zwischen der Mischungszone und Wartezone einen trichterförmigen Bereich auf, mit im Wesentlichen konischer Gestalt und zur Mischungszone hin abnehmendem Querschnitt. Durch die beschriebene Form sind die Kapillaren problemlos zwischen der Wartezone und der Mischungszone verfahrbar. Die Kapillaren sind vorzugsweise elastisch biegbar und können dem Verlauf der Wandung im trichterförmigen Bereich folgen.

Vorteilhafterweise ist die Länge der Mischungszone (in Richtung der Kapillaren) größer als die Breite der Mischungszone, insbesondere um einen Faktor zwei bis drei. Andere Relationen sind möglich. Wichtig ist eine Begrenzung des Volumens der Mischungszone. Daneben sollen innerhalb der Mischungszone unterschiedliche Positionen der Kapillaren möglich sein.

In Fortbildung der Erfindung kann vorgesehen sein, dass eine Warteposition der Kapillare für die Entnahme der Gase - innerhalb der Wartezone - dichter an der Mischungszone liegt als Wartepositionen der übrigen Kapillaren. Die Kapillare für die Entnahme der Gase führt beispielsweise zu einem Isotopen-Massenspektrometer oder einem anderen Analysator für die Untersuchung von Isotopenverhältnissen. Durch die beschriebene Warteposition der Kapillare für die Entnahme der Gase ist sichergestellt, dass in diese Kapillare keine Substanzen aus den übrigen in der Wartezone liegenden Kapillaren gelangen.

Vorteilhafterweise ist vorgesehen, dass eine Entnahmeposition der Kapillare für die Entnahme der Gase - innerhalb der Mischungszone - dichter an der Wartezone liegt als die Mischungspositionen der übrigen Kapillaren. Dadurch wird erreicht, dass die Durchmischung der interessierenden Gase, etwa ein Probengas mit einem Trägergas, in bestmöglicher Weise erfolgen kann, bevor die Gase in die Kapillare für die Entnahme der Gase eintreten.

Nach einem weiteren Gedanken der Erfindung kann vorgesehen sein, dass die Kapillare für die Entnahme der Gase an eine Leitung angeschlossen ist, welche eine Krimpstelle aufweist. Mit der Krimpstelle wird ein den Volumenstrom maßgeblich beeinflussender kleinster Querschnitt der Leitung genau definiert.

Vorteilhafterweise ist die Kapillare für die Entnahme der Gase an eine Leitung angeschlossen, die aus inertisiertem Edelstahl besteht. Dadurch können Reaktionen im weitesten Sinne (chemische Reaktionen, Hintergrundeffekte usw.) der Leitung mit den hindurchströmenden Gasen vermieden werden. Insbesondere gilt dies im Zusammenhang mit den bei Isotopenverhältnismessungen üblicher Weise analysierten Gasen.

In Fortbildung der Erfindung kann vorgesehen sein, dass die offene Kopplung innerhalb eines Analysators, insbesondere innerhalb eines Isotopen-Massenspektrometers angeordnet ist. In herkömmlichen Messeinrichtungen wird ein Analysator mit einer oder mehreren Peripherien gekoppelt. Hierzu weist der Analysator eine entsprechende Schnittstelle auf, beispielsweise Anschlüsse für eine oder mehrere offene Kopplungen. Somit liegen bei den bekannten Einrichtungen die offenen Kopplungen außerhalb des Analysators. Dies bedeutet, dass die offenen Kopplungen den außerhalb des Analysators vorherrschenden Bedingungen ausgesetzt sind, beispielsweise wechselnden Temperaturen (auch in Innenräumen). Mit der erfindungsgemäßen Anordnung sind die vorhandenen offenen Kopplungen innerhalb des Analysators vorgesehen, so dass die auch für die Genauigkeit der Messungen relevanten Umgebungsbedingungen kontrolliert bzw. konstant gehalten werden können. Konkret kann der Analysator ein Gehäuse aufweisen, in dem eine oder mehrere offene Kopplungen angeordnet sind. Am Gehäuse oder aus demselben heraus geführt sind mit der offenen Kopplung verbundene Schnittstellen für den Anschluss von Probengasen, Trägergasen und Referenzgasen. Bei den Schnittstellen kann es sich um im Prinzip bekannte Leitungskupplungen handeln, die mit Ventilen kombiniert sind. Vorzugsweise sind die Ventile individuell und insbesondere computergesteuert regelbar. Eine zentrale Regelungseinheit führt die eingangs erläuterte automatische, elektronische Zuflussregelung durch.

Vorteilhafterweise ist die offene Kopplung nach dem Gleichstromprinzip aufgebaut, nämlich mit ausschließlich aus ein und derselben Richtung einströmenden Gasen und insbesondere mit einseitig geschlossener Mischungszone. Bei Verwendung von relativ leichten Trägergasen ist dann die Wartezone unterhalb der Mischungszone angeordnet, während für relativ schwere Trägergase eine umgekehrte Anordnung verwendet wird.

Nach einem weiteren Gedanken der Erfindung kann vorgesehen sein, dass zumindest für eines der Gase - Probengas, Trägergas, Referenzgas - Kapillaren mit unterschiedlichen wirksamen Flussraten vorgesehen sind. Die unterschiedlichen Flussraten sind beispielsweise erzielbar durch Kapillaren mit unterschiedlichen Querschnitten, definierten Querschnittsverengungen, unterschiedlichen Längen usw.. Durch Anwahl bzw. Aktivierung der entsprechenden Kapillare kann gezielt ein Gas mit gewünschter Flussrate der offenen Kopplung zugeführt werden. Eine Feineinstellung der Flussraten kann zusätzlich oder alternativ über elektronisch angesteuerte Ventile erfolgen.

Gegenstand der Erfindung ist auch eine Vorrichtung für die Zufuhr von Gasen zu einer Analyseeinrichtung, wobei in einer Gasleitung ein bestimmter Gasstrom einstellbar ist, mit einer Zuleitung und mindestens einer weiterführenden Leitung, und mehreren Ventilen zwischen der Zuleitung und der weiterführenden Leitung, wobei die Ventile zueinander parallel geschaltet und stufenweise - binär oder inkrementell - schaltbar sind. Der Gasstrom in der Gasleitung wird demnach nicht durch mehr oder weniger starke Betätigung eines einzigen Ventils eingestellt. Vielmehr wird davon ausgegangen, dass ein Ventil nur wenige, vorzugsweise zwei diskrete Schaltzustände einnehmen kann. Ein geöffnetes Ventil lässt einen bestimmten Gasstrom passieren, zwei geöffnete Ventile einen etwa doppelt so hohen Gasstrom usw. Vorstellbar ist auch ein stufenweises Öffnen der Ventile, etwa mit den Einstellungen geschlossen / ein Viertel geöffnet / einhalb geöffnet / vollständig geöffnet.

Vorteilhafterweise ist jedem Ventil eine definierte Restriktion mit entsprechender Flussrate zugeordnet. Über die Restriktion wird der Gasstrom bei vollständigem Öffnen des jeweiligen Ventils definiert. Entweder ist die Restriktion zusätzlich zum Ventil vorgesehen oder aber in das Ventil integriert.

Vorteilhafterweise unterscheiden sich die Restriktionen von mindestens zwei Ventilen. Dadurch können mit wenigen parallelen Ventilen verschiedenste Gasstromwerte eingestellt werden.

Vorteilhafterweise sind mehrere Restriktionen vorgesehen, deren Flussraten sich um denselben Faktor unterscheiden. Beispielsweise kann ein Faktor 2 oder 2,5 vorgesehen sein. Ohne Dimensionsangabe ergeben sich dann die Flussraten 1/2/4/8... bzw. 1/2,5/6,25/15,625 usw. Andere Faktoren sind ebenfalls darstellbar.

Vorzugsweise sind die Ventile manuell, elektrisch oder elektronisch steuerbar. Auch können die Ventile Teil eines Regelkreises sein. In der einfachsten Ausführung werden die Ventile manuell voreingestellt.

Vorteilhafterweise ist zusätzlich eine Parallelleitung ohne Ventil zur Verbindung von Zuleitung und weiterführender Leitung vorgesehen. Die Parallelleitung verläuft parallel zu den Ventilen und stellt sicher, dass stets ein definierter Gasstrom fließt. Vorzugsweise erfüllt dieser Gasstrom die Mindestflussanforderungen der zugeordneten offenen Kopplung.

Nach einem weiteren Gedanken der Erfindung ist die Vorrichtung gekennzeichnet durch eine der weiterführenden Leitung nachgeordnete offene Kopplung zum Mischen des Gasstroms mit einem anderen Gasstrom. Über die Ventile wird dann der in die offene Kopplung gelangende Gasstrom eingestellt.

Erfindungsgemäß kann auch eine zweite weiterführende Leitung vorgesehen sein, wobei auch zwischen der zweiten weiterführenden Leitung und der Zuleitung mehrerer Ventile parallel zueinander angeordnet sind. Die Zuleitung speist demnach zwei weiterführende Leitungen, wobei diese jeweils eine eigene Gruppe von Ventilen zum Einstellen des jeweiligen Gasstroms aufweisen.

Vorteilhafterweise sind auch den Ventilen für die zweite weiterführende Leitung jeweils definierte Restriktionen mit entsprechenden Flussraten zugeordnet.

Nach einem weiteren Gedanken der Erfindung ist der zweiten weiterführenden Leitung eine eigene offene Kopplung, nämlich eine zweite offene Kopplung zugeordnet. Folglich kann der Gasstrom aufgeteilt werden auf zwei verschiedene offene Kopplungen.

Vorteilhafterweise ist der offenen Kopplung oder den beiden offenen Kopplungen als Analysator ein Massenspektrometer nachgeordnet. Insbesondere handelt es sich um ein Isotopen-Massenspektrometer, ein Massenspektrometer mit Plasmaquelle (ICP-MS), ein Massenspektrometer mit Stoßgasregelung für Kollisions- und Reaktionszellen. Vorzugsweise wird mit der erfindungsgemäßen Vorrichtung der Trägergasstrom bzw. ein Stoßgasstrom zum Analysator bzw. zur Analyseeinrichtung eingestellt oder geregelt.

Erfindungsgemäß kann die Zuleitung einen Abzweig zur Umgehung der Ventile und zur direkten Zufuhr in die offene Kopplung aufweisen. Der Abzweig weist keine oder nur eine relativ schwache Restriktion auf, so dass hier ein Gasstrom möglich ist, der größer oder gleich dem Gasstrom durch die im Übrigen stärkste Restriktion ist.

Nach einem weiteren Gedanken der Erfindung ist vorgesehen, dass die offene Kopplung oder eine der offenen Kopplungen eine erste Kapillare für die Zufuhr von Gas mit hoher Flussrate und eine zweite Kapillare für die Zufuhr von Gas mit dem gegenüber niedrigerer Flussrate aufweist. Vorzugsweise wird über die erste und zweite Kapillare Probengas unterschiedlicher Konzentration zugeführt, während über die weiterführende Leitung mit anschließender Kapillare Trägergas in die offene Kopplung gelangt.

Erfindungsgemäß kann die offene Kopplung eine Kapillare für die Entnahme von Gas - Schnüffelkapillare - aufweisen, welche relativ zur ersten oder zweiten Kapillare im Gleichstrom angeordnet ist und die zur jeweils anderen Kapillare - zweiten oder ersten Kapillare - im Gegenstrom angeordnet ist. Vorzugsweise ist die zweite Kapillare für die Zufuhr von Gas mit niedriger Flussrate im Gegenstrom zu der Schnüffelkapillare angeordnet. Entsprechend ist dann die erste Kapillare, nämlich die Kapillare für die Zufuhr von Gas mit hoher Flussrate im Gleichstrom zur Schnüffelkapillare angeordnet.

Nach einem weiteren Gedanken der Erfindung weist die Schnüffelkapillare einen Außendurchmesser auf, der kleiner ist als der Innendurchmesser der zweiten Kapillare für die Zufuhr von Gas. Außerdem sind Schnüffelkapillare und zweite Kapillare relativ zueinander bewegbar und koaxial zueinander angeordnet, derart, dass in einer Stellung die Schnüffelkapillare in die zweite Kapillare eintaucht und in einer anderen Stellung die beiden Kapillaren einen Abstand zueinander aufweisen.

Nach einem weiteren Gedanken der Erfindung weist die offene Kopplung oder eine der offenen Kopplungen eine Kapillare für die Zufuhr von Gas auf. Dabei weist diese Kapillare einen Abzweig auf, der über ein Ventil verschließbar ist. Das Ventil hat hier vorzugsweise die Funktion den Gasstrom bzw. die Flussrate durch die Kapillare zu verringern. Bei geöffnetem Ventil strömt ein Teilgasstrom aus dem Abzweig, so dass nur ein entsprechender Teilgasstrom über die Kapillare in die offene Kopplung gelangt.

Nach einem weiteren Gedanken der Erfindung weist die offene Kopplung oder eine der offenen Kopplungen eine Kapillare für die Zufuhr von Gas auf, wobei in diese Kapillare zwei oder mehr Zuleitungen münden. Auf diese Weise können verschiedene Gase oder Gasproben in eine Kapillare eingeleitet werden.

Erfindungsgemäß kann vorgesehen sein, dass die Zuleitungen Mehr-Wege-Ventile aufweisen, die in einer Schaltstellung das Gas in Richtung auf die offene Kopplung durchlassen und in einer anderen Schaltstellung das Gas ableiten. Vorzugsweise handelt es sich um Drei-Wege-Ventile. Diese leiten das Gas entweder in Richtung auf die offene Kopplung oder in Richtung auf ein anderes Ziel ab. Dadurch sind konstante Druckverhältnisse in einem den Zuleitungen vorgeordneten Bereich, einer sogenannten Peripherie, möglich.

Nach einem weiteren Gedanken der Erfindung ist über die Zuleitung Trägergas in zwei verschiedene offene Kopplungen zuführbar, wobei in eine der offenen Kopplungen Probengas über eine Kapillare zuführbar ist, wobei in die andere offene Kopplung Referenzgas über eine Kapillare zuführbar ist, und wobei aus beiden offenen Kopplungen Schnüffelkapillaren zu einem Analysator führen.

Gegenstand der Erfindung ist auch eine Vorrichtung für die Zufuhr von Probengas und Trägergas zu einer Analyseeinrichtung, mit folgenden Merkmalen:
a) eine erste Kapillare für Trägergas führt in eine offene Kopplung,
b) eine zweite Kapillare für Probengas mit niedriger Flussrate führt in die offene Kopplung,
c) eine dritte Kapillare für Probengas mit demgegenüber höherer Flussrate führt in die offene Kopplung,
d) eine vierte Kapillare führt als Schnüffelleitung aus der offenen Kopplung zur Analyseeinrichtung.

Demnach gelangen sogenanntes Lowflow-Probengas einerseits und Highflow-Probengas andererseits über dieselbe offene Kopplung in die Analyseeinrichtung.

Vorteilhafterweise ist der ersten Kapillare eine Trägergas-Zuleitung mit Abzweig vorgeordnet, wobei der Abzweig verbunden ist mit der zweiten Kapillare für das Probengas niedriger Flussrate. Im Abzweig kann ein Ventil vorgesehen sein, welches den Gasstrom im Abzweig sperrt oder durchlässt.

Vorteilhafterweise kann die vierte Kapillare als Schnüffelleitung in die zweite Kapillare für das Probengas mit niedriger Flussrate eintauchen. Das Probengas mit niedriger Flussrate wird dadurch unmittelbar an die Schnüffelkapillare übergeben.

Weitere Merkmale der Erfindung ergeben sich aus den Ansprüchen und aus der Beschreibung im Übrigen. Vorteilhafte Ausführungsbeispiele der Erfindung werden nachfolgend anhand von Zeichnungen näher erläutert. Es zeigen:
- Fig. 1: eine schematische Darstellung einer Vorrichtung zur Durchführung des erfindungsgemäßen Verfahrens, mit Reaktor, Gaschromatograph, offener Kopplung, Ionenquelle, Ablenkeinheit, Detektor und elektronischer Steuerung,
- Fig. 2: einen Teil der Figur 1, nämlich Reaktor, Gaschromatograph und Detektor für thermische Leitfähigkeit.
- Fig. 3: den Ausschnitt gemäß Fig. 2, jedoch mit Teiler für eine Probenzufuhr,
- Fig. 4: eine offene Kopplung integriert in ein Massenspektrometer und mit zwei angeschlossenen Peripherien, mit denen insgesamt drei unterschiedliche Probengasströme erzeugt werden, wobei die offene Kopplung vier Kapillaren für Referenzgase und zwei Kapillaren für Trägergase aufweist,
- Fig. 5a, 5b: eine offene Kopplung in zwei unterschiedlichen Konfigurationen, nämlich zum einen in einer Aus-Konfiguration und zum anderen bei der Übertragung von trägergasverdünntem Referenzgas in das Massenspektrometer,
- Fig. 6a, 6b, 6c, 6d: die offene Kopplung wie in Fig. 5a, 5b dargestellt, hier mit drei unterschiedlichen Konfigurationen, nämlich mit einer aktivierten von zwei möglichen Trägergaskapillaren oder mit beiden aktivierten Trägergaskapillaren, so dass eine Mischungszone von möglicherweise vorhandenen stark absorptiven Gasen befreit wird, um nachfolgend untergrundärmere Experimente durchführen zu können,
- Fig. 7a, 7b, 7c, 7d: drei Konfigurationen der offene Kopplung gemäß Fig. 5a, 5b hier zugleich mit Darstellung der Signalintensitäten für zwei Referenzgaspulse und zwei Probengaspulse,
- Fig. 8a - 8e: vier verschiedene Konfigurationen der offenen Kopplung, hier zugleich mit Darstellung der Signalintensitäten von zwei Referenzgaspulsen und zwei Probengaspulsen,
- Fig. 9a-9e: vier Konfigurationen der offenen Kopplung, hier mit Darstellung der Signalintensitäten von zwei Referenzgaspulsen und zwei Probengaspulsen,
- Fig. 10a - 10e: vier Konfigurationen der offenen Kopplung, hier mit Darstellung der Signalintensitäten von zwei Referenzgaspulsen und zwei Probengaspulsen,
- Fig. 11a - 11e: drei Konfigurationen der offenen Kopplung gemäß Fig. 5, hier mit Darstellung der Signalintensitäten des Probengases zum einen bei gleichbleibender Verdünnung und zum anderen mit wechselnder Verdünnung,
- Fig. 12: eine schematische Darstellung für die Steuerung oder Regelung eines Gasstroms durch zueinander parallele Ventile,
- Fig. 13: eine Kombination aus zwei offenen Kopplungen für die Zufuhr von Lowflow-Probengas, Highflow-Probengas, Trägergas (mit unterschiedlichen Gasströmen), und Referenzgas zu einem Massenspektrometer.

Zur Erläuterung des erfindungsgemäßen Verfahrens wird zunächst auf Fig. 1 verwiesen. Dargestellt ist das Zusammenwirken der einzelnen Komponenten bei der Isotopenverhältnisanalyse von Proben, die in einem Reaktor 20 verbrannt werden. Gasförmige Verbrennungsprodukte werden durch einen Gaschromatographen 21 geleitet und treten aus diesem als Probengase aus.

Die Probengase strömen über mindestens eine offene Kopplung 22 in eine Ionenquelle 23. Die dort gebildeten Ionen gelangen durch eine Ablenkeinheit 24 bis zu einem Detektorsystem 25 mit vorzugsweise mehreren Detektoren.

Ziel der Analyse ist eine Isotopenverhältnismessung der Probengase. Hierzu werden die Probengase der offene Kopplung 22 kontinuierlich alternierend mit Referenzgasen aus einer Referenzgasquelle 26 zugeführt. Daneben ist der offenen Kopplung 22 Trägergas aus einer Trägergasquelle 27 zuführbar.

Zur Vereinfachung der bildlichen Darstellung sind in Fig. 1 nur je eine Probengaszufuhr 28, Trägergaszufuhr 29 und Referenzgaszufuhr 30 eingezeichnet. Tatsächlich können jeweils mehrere Zufuhrleitungen und -quellen vorgesehen sein.

Die einzelnen Gase gelangen in die offene Kopplung 22 über Kapillaren, nämlich Probengaskapillare 31, Trägergaskapillare 32 und Referenzgaskapillare 33. Daneben ist eine zur Ionenquelle 23 führende Kapillare 34 vorgesehen. Diese wird auch als Schnüffelleitung bezeichnet. Auch hier können jeweils mehrere Kapillaren vorgesehen sein, je nach vorhandenen Zufuhrleitungen.

Die Kapillaren 31 bis 34 sind aktivierbar, d. h. in die offene Kopplung hinein- und wieder zurückbewegbar durch bekannte und nicht näher gezeigte Aktuatoren 35 bis 38. Außerdem können den Kapillaren 31 bis 34 elektronisch regelbare Ventile 39 bis 42 vorgeordnet sein. Wegen der Gefahr der Fraktionierung wird die Kapillare 34 (zum Analysator) möglichst ohne Ventil betrieben.

Offene Kopplung 22 mit Kapillaren 31 bis 34, Aktuatoren 35 bis 38 und Ventile 39 bis 42, Ionenquelle 23, Ablenkeinheit 24 und Detektorsystem 25 sind hier integrierte Bestandteile eines Isotopen-Massenspektrometers 43 als Analysator und damit zugleich Bestandteil ein und derselben apparativen Einheit, die möglichst von einem Gehäuse 44 umgeben ist.

Dem Massenspektrometer 43 zugeordnet ist eine elektronische Steuerung, hier ein Computer 45 mit Schnittstellen für die Übertragung von Daten. Der Computer 45 kann in das Massenspektrometer 43 integriert sein oder aber (wie in Fig. 1 gezeigt) an das Massenspektrometer angeschlossen sein. Gestrichelt gezeichnete elektrische Leitungen bzw. Datenleitungen und/oder Steuerleitungen verbinden den Computer 45 zumindest mit dem Detektorsystem 25, den Aktuatoren 35 bis 38 und den regelbaren Ventilen 39 bis 42.

Zwischen dem Gaschromatographen 21 und der Probengaszufuhr 28 ist vorzugsweise ein Detektor 46 für die Konzentration der Probengase vorgesehen, beispielsweise zur Detektion der thermischen Leitfähigkeit. Entsprechend ist der Detektor 46 auch über eine Datenleitung mit dem Computer 45 verbunden.

Die verschiedenen Gaszufuhren 28, 29, 30 sind über geeignete Schnittstellen, beispielsweise Kupplungen 47, 48, 49 an das Massenspektrometer 43 anschließbar.

Bei der Messung der Isotopenverhältnisse werden die verschiedenen Gasströme über den Computer 45 geregelt. Hierzu werden die Ventile 39 bis 42 geregelt und/oder die Aktuatoren 35 bis 38 für die Bewegung der Kapillaren 31 bis 34 angesteuert. Außerdem kann die Regelung durch Messergebnisse beeinflusst werden, insbesondere durch die Analyseergebnisse des Detektorsystems 25 und/oder die Konzentrationsmessung des Detektors 46.

Anhand der weiteren Figuren werden verschiedene Beispiele für Messabläufe erläutert:
Gemäß Fig. 2 wird im Reaktor 20 eine Substanz umgesetzt, aus der beispielsweise CO2 und N2 entstehen. Die Gase werden im Gaschromatographen 21 zeitlich voneinander getrennt und gelangen über die Probengaszufuhr 28 in das nicht dargestellte Massenspektrometer.

Anhand der Signale des Detektors 46 ist erkennbar, dass CO2 in wesentlich größerer Konzentration auftritt als N2. Dies kann im Bereich der offenen Kopplung durch Verdünnung mit Trägergas berücksichtigt werden.

Das CO2 ist aber die Ursache für ein messtechnisches Problem insbesondere im Zusammenhang mit der Isotopenverhältnisbestimmung. Die Probengase werden abwechselnd mit Referenzgasen gemessen, so auch CO2. Dieses weist einen chromatographischen Peak mit langem Nachlauf auf, so dass die N2-Bestimmung der nachfolgenden Messung gestört wird. Außerdem wird in der Ionenquelle des Massenspektrometers aus CO2 CO gebildet, welches das gleiche Masse-zu-Ladung-Verhältnis aufweist wie N2.

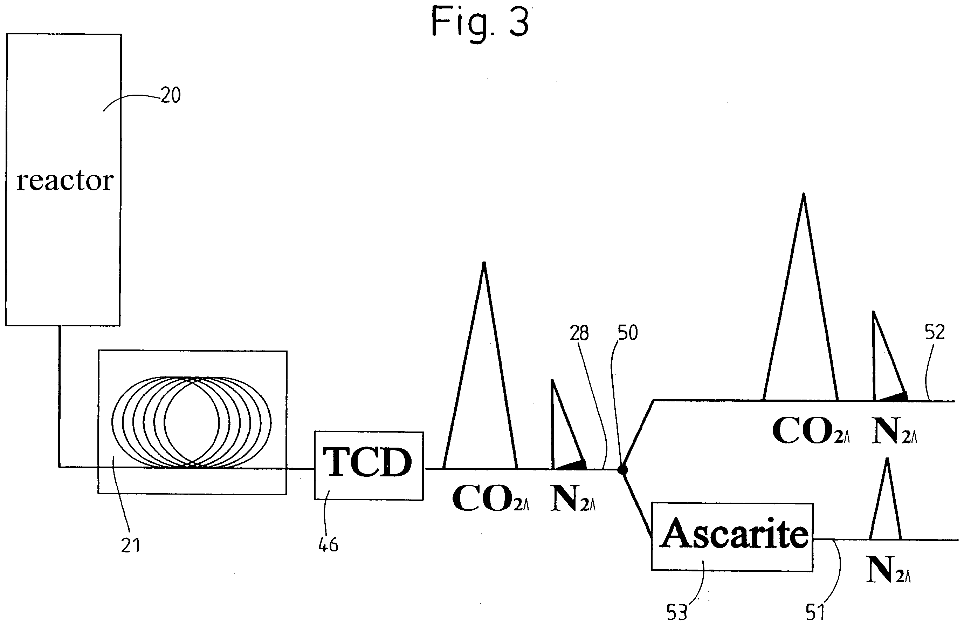

Zur Lösung des beschriebenen Problems wird die Probengaszufuhr 28 über einen Teiler 50 gesplittet auf zwei Zufuhrleitungen 51, 52, wie in Fig. 3 gezeigt. In der Zufuhrleitung 51 ist eine Falle 53 eingebaut, die hier als Ascarit-Falle ausgebildet ist um das CO2 zurückzuhalten. Über die Zufuhrleitung 51 gelangt deshalb nur N2 in die offene Kopplung, während über die Leitung 52 dasselbe Gas wie durch die Probengaszufuhr 28 strömt. Natürlich sind auch andere Bearbeitungen des Probengasstroms möglich.

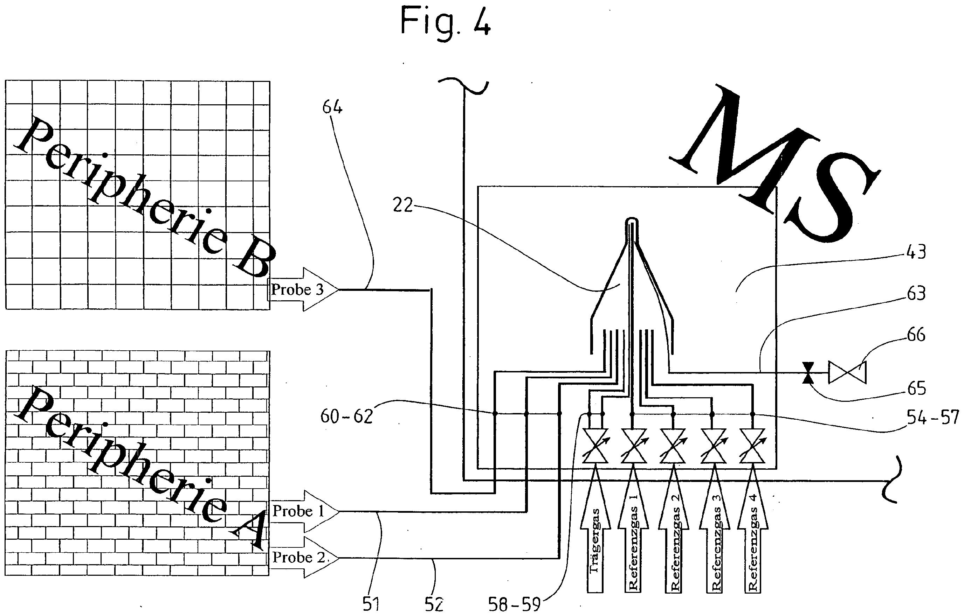

Die Zufuhrleitungen 51 und 52 sind jeweils über eigene Kupplungen, Ventile und Kapillaren an eine offene Kopplung angeschlossen analog der Darstellung in Fig. 1 und wie beispielsweise in Fig. 4 im Bereich einer Peripherie A dargestellt. Bei der Messung der Isotopenverhältnisse können mit der Anordnung gemäß Fig. 3 im Laufe einer Messung N2 und CO2 aus derselben Probe und über dieselbe offene Kopplung strömend gemessen werden. Dabei kann im Bereich der offenen Kopplung eine Verdünnung der über die Zufuhrleitung 52 strömenden Gase erfolgen, so dass im Massenspektrometer stets die messtechnisch ideale Signalintensität vorliegt. Die Konzentration wird aufgrund der vom Detektor 46 gelieferten Signale berechnet und angepasst. Diese Art der Konzentrationsüberwachung und Anpassung durch Verdünnung ist auch mit der Ausführung gemäß Fig. 2 durchführbar.

Fig. 4 zeigt eine erfindungsgemäße Vorrichtung mit der offenen Kopplung 22 als Bestandteil des Massenspektrometers 43. Der offenen Kopplung 22 werden hier Gase aus einer Vielzahl von Kapillaren zugeführt, denen ebenso viele Aktuatoren (nicht gezeigt) und Ventile zugeordnet sind. Aus Gründen der besseren Übersicht sind die weiteren Bestandteile des Massenspektrometers sowie der Computer 45 für die elektronische Steuerung mit den zugehörigen Datenleitungen nicht eingezeichnet.

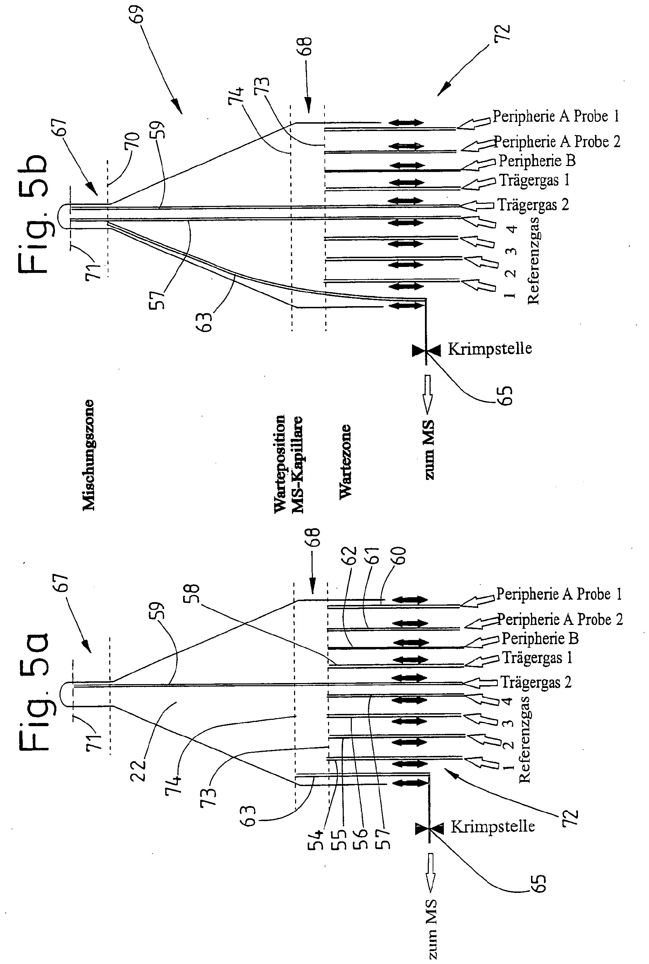

Beispielhaft sind vier Referenzgaskapillaren 54 bis 57, zwei Trägergaskapillaren 58, 59 und drei Probengaskapillaren 60, 61 und 62 vorgesehen, sowie eine zum Massenspektrometer führende Kapillare 63. Die genannten Bezugsziffern sind auch in den Fig. 5a bis 11d angegeben.

Als Peripherie A wird hier eine Einheit zur Probenaufbereitung verstanden, etwa wie in den Fig. 1 bis 3 dargestellt und - wie in Fig. 3 erkennbar - mit zwei Zufuhrleitungen 51, 52. Analog bezeichnet die Peripherie B eine weitere Einheit zur Probenaufbereitung, etwa entsprechend den Fig. 1 und 2, d. h. mit nur einer Zufuhrleitung 64 analog der Probengaszufuhr 28.

Eine Besonderheit ist im Bereich der zur Ionenquelle führenden Kapillare 63 vorgesehen, nämlich eine Krimpstelle 65. Die Kapillare 63 ist aus inertisiertem Edelstahl hergestellt und im Bereich der Krimpstelle 65 auf einen genau definierten Querschnitt verengt. Dadurch werden für diese Kapillare reproduzierbare Bedingungen geschaffen. Der Krimpstelle 65 nachgeordnet ist ein Absperrventil 66 analog dem Ventil 42 in Fig. 1.

Die offene Kopplung 22 ist nach dem Gleichstromprinzip aufgebaut, siehe insbesondere Fig. 5a ff., nämlich mit parallel zueinander aus derselben Richtung in die offene Kopplung eintauchenden Kapillaren und entsprechend mit aus derselben Richtung in die offene Kopplung einströmenden Probengasen, Referenzgasen und Trägergasen.

Die offene Kopplung 22 weist eine Mischungszone 67, eine Wartezone 68 und eine dazwischenliegende Übergangszone 69 auf. Die Mischungszone 67 ist einseitig verschlossen und weist einen geringen Querschnitt relativ zur Wartezone 68 auf. Das Verhältnis der Querschnitte zueinander ist abhängig vom Platzbedarf der Kapillaren im Bereich der Wartezone. Angestrebt ist ein möglichst kleiner Querschnitt der Mischungszone 67, um dort für wechselweise zugeführte Gase möglichste schnelle Gaswechsel erzielen zu können.

In der Mischungszone 67 sind zumindest zwei verschiedene Positionen vorgesehen, nämlich eine äußere Mischungsposition 70 für die zur Ionenquelle führende Kapillare 63 als deren Entnahmeposition und eine innere Mischungsposition 71 für alle übrigen Kapillaren. Die Begriffe "innere" und "äußere" beziehen sich dabei auf den Abstand der beiden Mischungspositionen 70, 71 zu einem Einlassbereich 72 der offenen Kopplung. Die dichter am Einlassbereich 72 liegende Mischungsposition 70 wird als äußere Mischungsposition bezeichnet, da sie der einzigen Öffnung der offenen Kopplung näher liegt als die innere Mischungsposition 71. Die Entnahmeposition der Kapillare 63 kann auch etwas außerhalb der Mischungszone 67 und nicht wie hier an der Grenze derselben vorgesehen sein.

Die Wartezone 68 weist ebenfalls zwei Wartepositionen auf, nämlich eine äußere Warteposition 73 für alle Kapillaren mit Ausnahme der Kapillare 63 und eine innere Warteposition 74 für die Kapillare 63, siehe beispielsweise Fig. 5a.

Die Übergangszone 69 ist konisch ausgebildet mit einem kleinsten Querschnitt im Bereich des Übergangs zur Mischungszone 67 und einem größten Querschnitt im Bereich des Übergangs zur Wartezone 68. Mischungszone 67 und Wartezone 68 sind selbst jeweils mit über ihre Länge gleichbleibenden Querschnitten ausgebildet. Andere Ausführungen sind möglich. Wichtig ist ein leichtes und reproduzierbares Einführen der Kapillaren bis in die Mischungszone 67 hinein.

Im vorliegenden Ausführungsbeispiel ist die offene Kopplung 22 mit nach unten gerichtetem Einlassbereich 72 vorgesehen und damit insbesondere für die Verwendung leichter Trägergase (im Verhältnis zu Luft) geeignet. Die Gase sammeln sich im Bereich der Mischungszone 67 und verdrängen schwerere Gase.

In Fig. 5a ist nur die Trägergaskapillare 59 aktiviert. Dies bedeutet, dass nur diese Kapillare bis in die Mischungszone 67 hineinreicht. Das aus der Kapillare 59 austretende Trägergas verdrängt alle übrigen Gase aus der Mischungszone 67. Aus den weiteren Kapillaren austretende Gase gelangen nicht in die Kapillare 63, da diese in ihrer eigenen Warteposition 74 weiter in die offene Kopplung hineinragt als die übrigen, nicht aktivierten Kapillaren.

In der Darstellung der Fig. 5b sind die Trägergaskapillare 59 und die Referenzgaskapillare 4 sowie die zur Ionenquelle führende Kapillare 63 aktiviert. Entsprechend wird mit Trägergas verdünntes Referenzgas in die Ionenquelle geleitet.

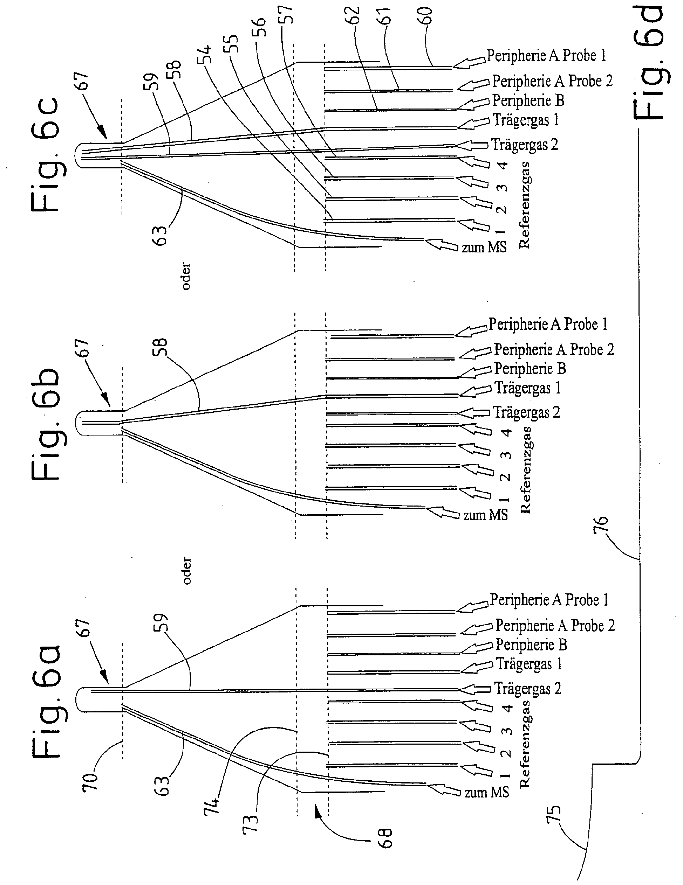

In den Fig. 6a, 6b und 6c ist das Einbringen einer oder mehrerer Trägergaskapillaren in das aktive Volumen der Mischungszone 67 dargestellt. Die Konfiguration gemäß Fig. 6c mit zwei Trägergaskapillaren kann beispielsweise kombiniert werden mit einer aktivierten Probengaskapillare 60 bis 62 (in Bild Fig. 6c ist keine der Kapillaren 60 bis 62 aktiviert) zur extremen Verdünnung von sehr hohen Probenkonzentrationen.

Das Einbringen von Trägergas in die Mischungszone 67 dient beispielsweise der schnellen Verdrängung stark absorptiver Gase, wie SO2, um nachfolgend untergrundärmere Experimente durchführen zu können. Fig. 6d zeigt den zeitlichen Verlauf eines Signals am Detektor bei der Konfiguration gemäß einer der Fig. 6a bis 6c. Zunächst ist ein starkes Untergrundsignal erkennbar, siehe Kurvenast 75. Nach kurzer Zeit lässt das Untergrundsignal sprunghaft nach bzw. ist sehr schwach, siehe Kurvenast 76.

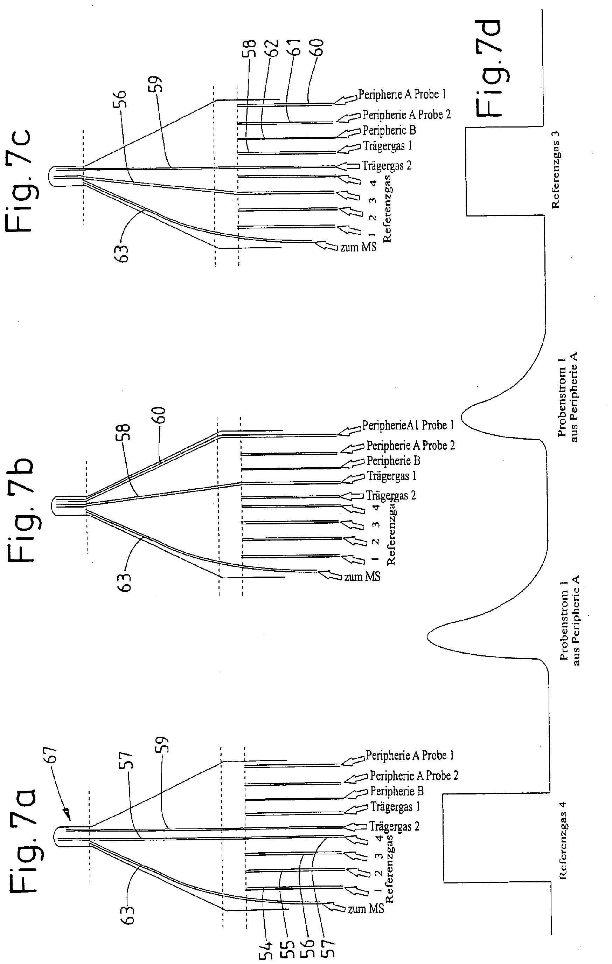

Die Fig. 7a bis 7d zeigen die wechselweise Messung der Signale eines Referenzgases mit einem Trägergas (Kapillaren 57, 59, 63), einer Probe mit einem anderen Trägergas (Kapillaren 60, 58, 63) und ein anderes Referenzgas mit dem zuerst verwendeten Trägergas (Kapillaren 59, 56 und 63). In Fig. 7d sind die unterschiedlichen Signalintensitäten erkennbar, sowie (die beiden mittleren) Probensignale. Das erste (größere Probensignal) folgt auf das Signal für das Referenzgas der Kapillare 57 von nahezu gleicher Intensität, während auf das (schwächere) Probensignal das (ebenfalls schwächere) Signal für das Referenzgas aus der Kapillare 56 folgt. Die unterschiedlichen Referenzgasintensitäten werden eingestellt entweder über unterschiedliche Durchflussraten als Eigenschaften der Kapillaren 56, 57 oder über die jeweils zugeordneten elektronischen Ventile, die nur in den Fig. 1 und 4 dargestellt sind. Beide Arten der Verdünnungsregelung können auch miteinander kombiniert werden.

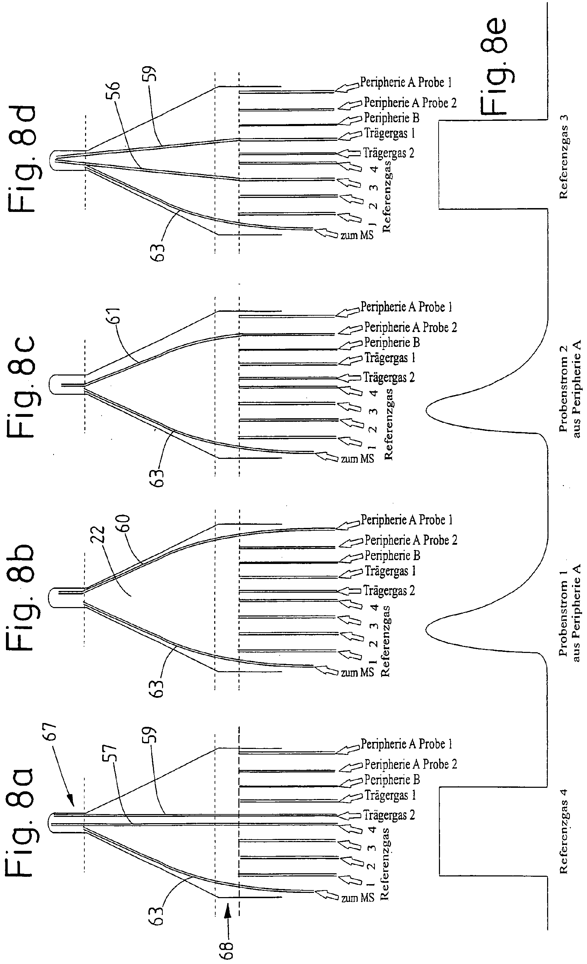

Die Fig. 8a bis 8e zeigen die Aktivierung der verschiedenen Kapillaren und die Signalintensitäten bei der Messung zweier Probenströme einer Peripherie. Dabei werden nacheinander die Probengaskapillaren 60, 61 aktiviert. Flankiert sind hier die Probensignale von unterschiedlich mit Trägergas verdünnten Referenzgaspulsen, siehe erstes und letztes Rechteck-Signal in Fig. 8e. Das Probengas wird in der offenen Kopplung nicht verdünnt. Entsprechend zeigen die Fig. 8b, 8c keine aktivierten Trägergaskapillaren. Sämtliche Signale werden innerhalb einer Mess-Sequenz analysiert. Dies gilt auch für die anderen gezeigten Messungen.

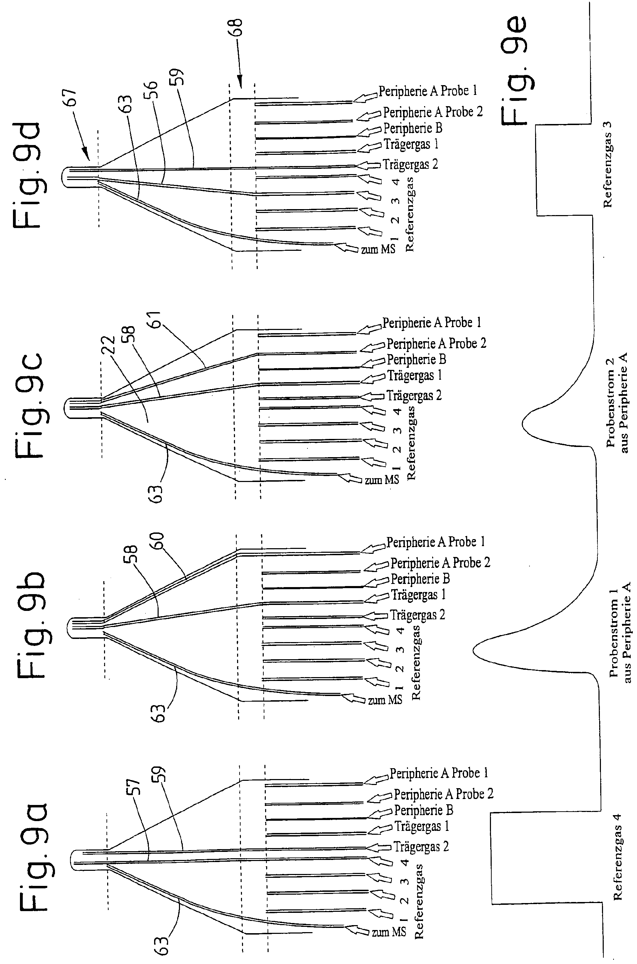

Wie zuvor in den Fig. 8a bis 8e wird in dem Beispiel der Fig. 9a bis 9e innerhalb einer Mess-Sequenz zwischen den beiden Probenströmen der Peripherie A geschaltet, siehe mittlere Peaks der Fig. 9e. Hier werden jedoch die Probengase in der offenen Kopplung durch Trägergas aus der Kapillare 58 verdünnt. Das zweite Probensignal ist von geringerer Intensität. Entsprechend wird die Intensität des Referenzgases aus der Kapillare 56 angepasst.

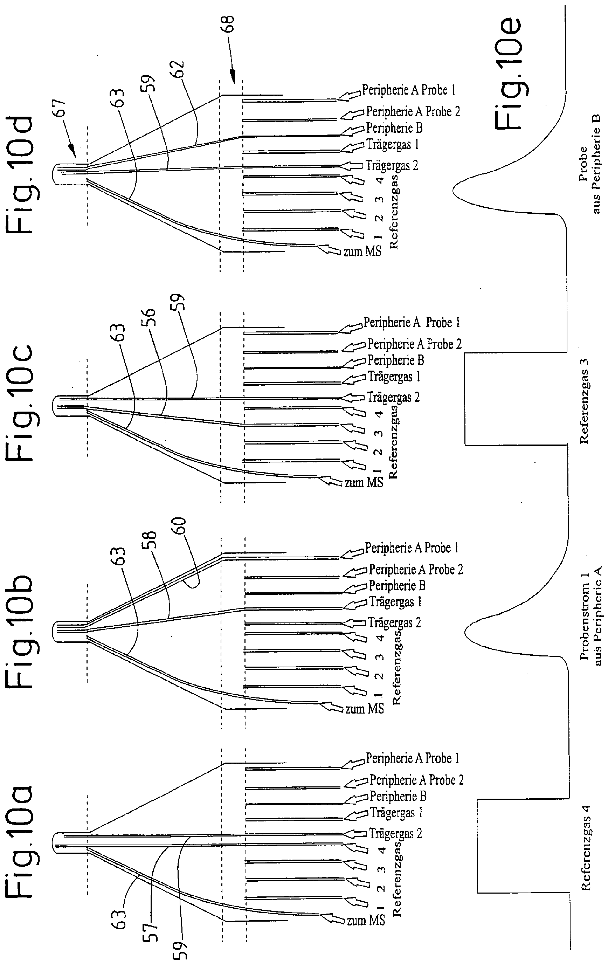

Die Fig. 10a bis 10e zeigen eine Mess-Sequenz mit der Messung von zwei Probenströmen aus den beiden jeweiligen Peripherien A und B. Vor beiden Probensignalen werden die jeweiligen Referenzgase detektiert, in diesem Fall das Referenzgas aus der Kapillare 57 verdünnt mit Trägergas aus der Kapillare 59 (vor dem ersten Probensignal) und das Referenzgas aus der Kapillare 56, wiederum verdünnt mit Trägergas aus der Kapillare 59. Die Trägergase wurden jeweils in unterschiedlicher Menge beigefügt, um die unterschiedlichen Proben-Konzentrationen der Peripheriegase in den für den Analysator optimalen Bereich einzustellen. So ist es möglich beide Peripheriesignale auf etwa die selbe Intensität zu bringen.

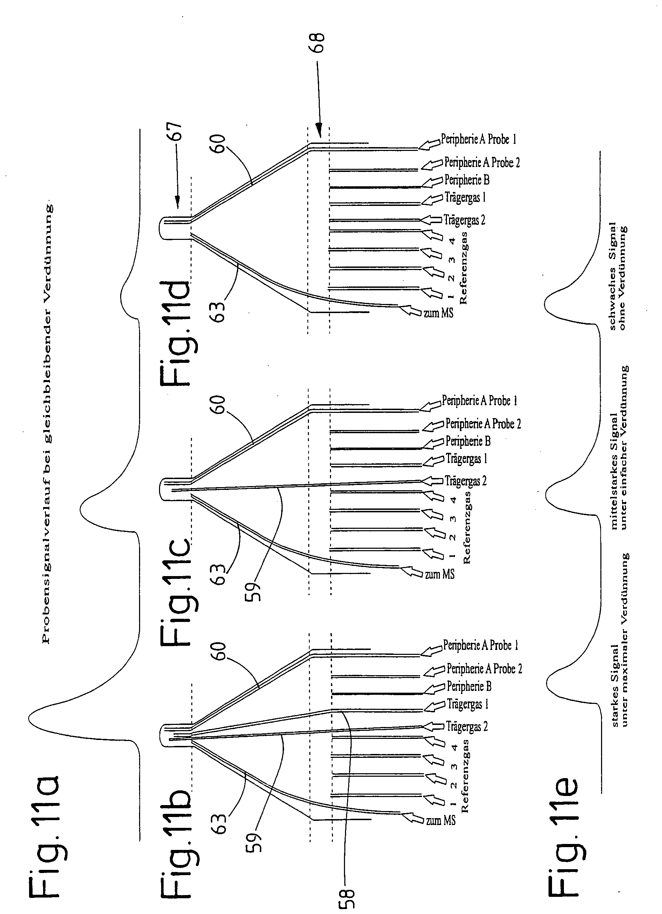

Die Fig. 11a bis 11e zeigen drei aufeinanderfolgende Probensignale aus derselben Probenkapillare 60, aber einmal bei gleichbleibender Verdünnung aus einer beliebigen Kapillare (Fig. 11a) und mit jeweils unterschiedlich starker Verdünnung zur Erzielung gleicher Signalintensitäten am Detektor, siehe Fig. 11b bis 11e. Die Konfiguration gemäß Fig. 11b zeigt eine starke Verdünnung über die Trägergaskapillare 58. Eine einfache Verdünnung über die Trägergaskapillare 59 ist in Fig. 11c dargestellt. In der Konfiguration gemäß Fig. 11d erfolgt keine Verdünnung. Durch die unterschiedlich starken Verdünnungen ergeben sich gleich starke Signalintensitäten gemäß Fig. 11e, anstelle der sonst zu erwartenden unterschiedlichen Signalintensitäten gemäß Fig. 11a. Aus Gründen der Übersichtlichkeit sind hier die gleichwohl vorhandenen Referenzgaspulse nicht gezeigt. Wie schon bei den anderen Mess-Sequenzen erfolgt nach jeder Messung aus Probe und Referenz ein automatischer Gaskonfigurationswechsel des Analysators, beispielsweise eine Änderung der Magnetfeldstärke der Ablenkeinheit und Änderungen der Parameter der Ionenquelle.

Die computergesteuerte bzw. elektronisch geregelte Konzentrationseinstellung der Referenzgase und Probengase durch Erhöhung oder Verminderung des Trägergasflusses weist erhebliche Vorteile auf:
Es wird erheblich weniger Referenzgas verbraucht als bisher, da in der Regel nach einer Vordruckseinstellung keine weitere Regelung und daher auch die sonst üblichen Bluterkapillaren zur Entlüftung von Druckminderern nicht mehr erforderlich sind. Dies reduziert die Betriebskosten, den Wartungsaufwand, den Aufwand der Referenzgaskalibrierung sowie das Gefährdungspotenzial bei Verwendung von toxischen oder brennbaren Referenzgasen.

Nicht mehr zwingend erforderlich sind genaue Probenabmessung und -kenntnis zur Signalintensitätsregulierung, da die Signalintensitäten von Referenz und Probe durch die Computersteuerung automatisch aneinander angepasst werden können. So können die Intensitäten der Referenzgaspulse entsprechend der gemessenen Probe zur Erreichung einer optimalen Messgenauigkeit über die Steuerung der Verdünnung in der offenen Kopplung angeglichen werden. Außerdem kann die Konzentrationseinstellung der Probe im Gas zeitnah optimiert werden, wenn die vorgeschaltete Peripherie eine Voranalyseeinheit - wie beispielsweise einen Flammenionisationsdetektor (FID) oder einen Detektor für thermische Leitfähigkeit (TCD) - enthält, dessen Ergebnis auf die Probenkonzentration schließen lässt. Über die Computersteuerung kann die Probe in der offenen Kopplung zur Erzielung der höchsten Messgenauigkeit optimal verdünnt werden.

Gerätediagnostische Messungen wie eine Linearitätsüberprüfung oder eine oft durchzuführende H3-Faktorbestimmung können durch die Computersteuerung ebenfalls automatisiert werden. Die Anwesenheit eines Experimentators ist nicht mehr nötig und Kalibrationsfaktorbestimmungen können messungsbegleitend durchgeführt werden, so dass die Genauigkeit der Experimente nochmals erhöht wird.

Komplexere Messabläufe, die eine Variation des Mischungsverhältnisses von Referenz-oder Probengas in der offenen Kopplung voraussetzen, können nun als programmierbare Sequenzen automatisch durchgeführt werden, ohne dass zwischendurch eingegriffen werden muss. Die Messauslastung der Vorrichtung wird dadurch zusätzlich erhöht. Besonders vorteilhaft ist die elektronische Regelung des oder der Trägergase in Verbindung mit der dargestellten offenen Kopplung, da letztere die Möglichkeiten von automatisierten Mess-Sequenzen stark erweitert.

Bei einer Abfolge von mehreren gleichen Probensignalen, kann eine unter Umständen auftretende Drift über die automatische Verdünnungseinstellung angepasst werden.

Die Detektion eines Proben-Peaks vor einem Referenzsignal ist vorteilhaft, wenn die Retentionszeit des Proben-Peaks aus der Peripherie nicht genau bekannt ist. Bei dieser Konstellation kann die Intensität der den Proben-Peaks nachfolgend aufzunehmenden Referenzsignale zeitnah optimal eingestellt werden.

Eine Konzentrationskontrolle über die Verdünnungsregelung ist fraktionierungsfrei.

Die beschriebene Vorrichtung weist folgende Vorteile auf:
Die Zuleitung zwischen offener Kopplung und Analysator liegt nicht mehr außerhalb des letzteren zwischen der Peripherie und dem Analysator, sondern innerhalb von letzterem. Die Kapillaren können daher vor Temperaturschwankungen und sonstigen störenden Einflüssen besser bewahrt werden. Die Signalstabilität verbessert sich, was mit einer erhöhten Messgenauigkeit einhergeht. Verstärkt wird dieser Effekt noch durch die Verwendung der inertisierten Stahlkapillare mit Krimprestriktion für die Zuleitung zum Analysator.

Bei Anschluss mehrerer Peripherien verringern sich die Kosten, da als Schnittstelle nur eine offene Kopplung pro Analysator erforderlich ist und nicht - wie zuvor - eine Schnittstelle je Peripherie.

Da nur noch eine offene Kopplung mit Trägergas gespült werden muss, verringert sich dessen Verbrauch und die damit verbundenen Kosten.

Im Vergleich zum herkömmlichen Design eines Analysators werden auch weniger Absperrventile benötigt, so dass sich wegen der verminderten Leckanfälligkeit der Wartungs- und Kostenaufwand reduziert.

Es kann eine relativ große Anzahl von Peripherien zugleich an den Analysator bzw. an die offene Kopplung angeschlossen werden. Die Wartezone 68 bietet der erhöhten Anzahl Kapillaren ausreichend Platz.

Von Peripherien, deren Probengasstrom geteilt wird, können die unterschiedlichen Probengasströme nach Bedarf über unterschiedliche Kapillaren der offenen Kopplung und damit dem Analysator zugeführt werden.

Das Umschalten zwischen den Referenzgasen oder den Peripherien bzw. unterschiedlichen Peripheriezuleitungen ist stark vereinfacht, da die Prozesse allein durch die computergesteuerte Kapillarposition in der offenen Kopplung bestimmt werden.

Die Installation von Peripherien oder das Umschalten zwischen Peripherien ist ohne Lufteintrag in den Analysator und damit mit minimalen Tot- und Einlaufzeiten möglich.

Die automatische Umschaltung zwischen den angeschlossenen Referenzgasen, den Peripherien bzw. unterschiedlichen Peripheriezuleitungen ermöglicht eine erhöhte und damit ökonomische Auslastung des Analysator-Betriebs, da automatisierte Mess-Sequenzen unter Einbeziehung unterschiedlicher Peripherien und Peripheriezweige ohne manuelle Eingriffe möglich sind.

Für Anwendungen beispielsweise in der Luftanalytik ist es vorteilhaft, dass mehrere Referenzgase zugleich dem Massenspektrometer zugeführt werden können, um Interferenzeffekte der unterschiedlichen Isotope zu untersuchen und zu kalibrieren. Außerdem kann bei Einlass verschiedener Gase wie beispielsweise CO2, SO2 und einer schweren Komponente wie Methylchlorid und anderen eine Multikomponentenmassenkalibrierung des Analysators durchgeführt werden. Dies erlaubt eine stark verbesserte, weil über zahlreiche Punkte bestimmte, Massenkalibration des Analysators und damit eine höhere Messgenauigkeit.

Bei Peripherien, deren Probenaufbereitung mit hohem Hintergrund und/oder gar Drifts einhergehen, ist es sinnvoll, bei der Messung des Referenzgassignals das Hintergrundgas der Peripherie ebenfalls mit in den Analysator einzulassen. Bei der konventionellen Technik geschieht dies über eine separate Zuleitung der der Probe vorbehaltenen offenen Kopplung. Bei der erfindungsgemäßen Ausführung kann dies durch Aktivieren von Trägergas-, Probengas-, Referenzgas- und zum Analysator führenden Kapillaren realisiert werden. Dadurch kann hier der Referenzgasstrom um mehr als einen Faktor 5 reduziert werden, was die Lebensdauer eines Referenzgasbehälters um denselben Faktor steigert und die mit dem Wechsel verbundenen Kosten und den Arbeitsaufwand vermindert.

Bei Installation von mehreren Trägergaszuleitungen mit unterschiedlichen Zuflüssen kann im Rahmen der Messroutine die Konzentration von Referenz- und Probengasen in gewissen Grenzen fraktionierungsfrei einem optimalen Messablauf angepasst werden, siehe beispielsweise Fig. 11a bis 11e.

Die Warteposition 74 für die zum Analysator führende Kapillare 63 befindet sich tiefer in der offenen Kopplung als die Warteposition 73 für die anderen Kapillaren, damit in der Aus-Konfiguration, siehe Fig. 5a, nur Trägergas in den Analysator gelangt und kein Gas aus den anderen wartenden Zuführungskapillaren.

Das durch den verminderten Durchmesser der Mischungszone 67 minimal gehaltene Mischungsvolumen sorgt für geringe Schaltzeiten und optimales Mischungsverhalten der Gase.

Ein Trägergas, dessen Dichte geringer ist als die der umgebenden Luft, verhindert bei einer offenen Kopplung, dessen offenes Ende nach unten zeigt (wie in den Figuren dargestellt), effektiver den Einbruch von Luft in die Schnittstelle und die damit verbundene Störung, als bei einer um 180° gedrehten Ausrichtung. Letztere ist vorteilhaft für die Verwendung von Trägergasen, die eine höhere Dichte als Luft besitzen. Die anhand der Figuren dargestellte Vorrichtung würde in diesem Fall um 180° gedreht angeordnet sein.

Alle Leitungen bzw. Kapillaren, die in die oder aus der offenen Kopplung führen, werden ständig, also auch im Wartemodus mit den entsprechenden Betriebsgasen gespült, so dass Störungen durch Verunreinigungen wie Wasser, Luft etc. bei der erneuten Verwendung nicht auftreten, und so die Einlauf- und Totzeiten stark verringert werden.

Die erfindungsgemäße Vorrichtung, insbesondere die gezeigte offene Kopplung, bietet zahllose Möglichkeiten für Kapillarkonfigurationen und Schaltfolgen für die unterschiedlichsten analytischen Fragestellungen. Die anhand der Figuren dargestellten Konfigurationsabfolgen können für eine große Anzahl an Anwendungsmöglichkeiten beliebig kombiniert werden und sind bei weitem noch nicht vollständig.

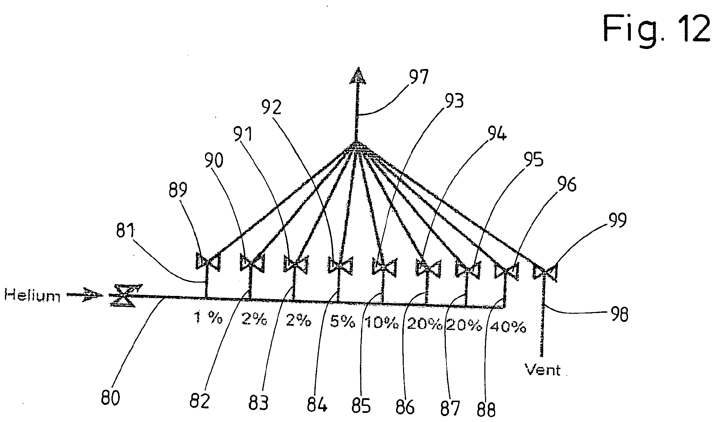

Fig. 12 zeigt das Prinzip der Einstellung eines Gasstroms in einer Leitung durch zueinander parallele Ventile. Als Beispiel wird hier eine Zuleitung 80 für ein Trägergas Helium aufgesplittet auf acht Nebenleitungen 81 bis 88. In jeder der Nebenleitungen 81 bis 88 ist ein eigenes Ventil 89 bis 96 angeordnet, welches vorzugsweise elektrisch schaltbar ist zwischen zwei Schaltpositionen, nämlich offen oder geschlossen. Den Ventilen 89 bis 96 sind in Fig. 12 nicht sichtbare Restriktionen zugeordnet, beispielsweise definierte Querschnittsverengungen der Nebenleitungen 81 bis 88. Dadurch unterscheiden sich die in den einzelnen Nebenleitungen vorliegenden Flussraten, welche hier beispielsweise bei 1%/2%/2%/5%/10%/20%/20%/40% der Flussrate der Zuleitung 80 liegen. Durch Öffnen nur einzelner der Ventile 89 bis 96 können nahezu beliebige Werte zwischen 1% und 100% eingestellt werden. Im Anschluss an die Ventile 89 bis 96 führen die Nebenleitungen 81 bis 88 wieder zusammen zu einer weiterführenden Leitung 97 mit der resultierenden Flussrate.

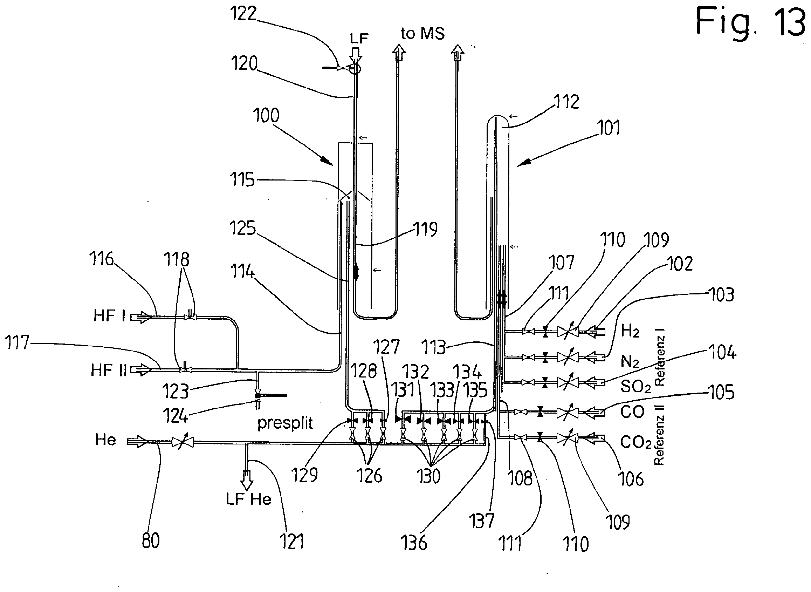

Parallel zu den Nebenleitungen 81 bis 88 ist noch eine Rückspülleitung 98 mit eigenem Ventil 99 vorgesehen. Hierüber kann auch ein Druckabbau im Bereich der weiterführenden Leitung 97 durchgeführt werden. Letztere ist beispielsweise Teil einer Kapillare, die in eine offene Kopplung mündet, wie dies nachfolgend anhand der Fig. 13 näher erläutert wird.

Erkennbar sind zwei offene Kopplungen 100, 101 (open splits) als Zuführungseinrichtungen für die zu analysierenden Gase zu einem Massenspektrometer MS. Die offene Kopplung 100 ist für die Zufuhr von Probengasen vorgesehen, die offene Kopplung 101 für die Zufuhr von in diesem Fall fünf verschiedenen Referenzgasen. Die Aufteilung in separate Proben- und Referenz-Zuführung hat den Vorteil, dass auch Probenströme mit sehr geringem Fluss gut messbar sind. Die Probenströme können entweder direkt eingelassen oder es kann in einer relativ kleinen Mischungszone in der offenen Kopplung 100 eine Vermischung mit Trägergas erfolgen. Die separate Zuführung ist weiterhin vorteilhaft wegen der Möglichkeit die Referenz einfach und zuverlässig "auf dem Untergrund der Probe" zu messen.

Für die Zuführung der Referenzgase sind hier fünf Zuleitungen 102 bis 106 vorgesehen, über die beispielsweise H2, N2, SO2, CO und/oder CO2 der offenen Kopplung 101 als Referenzgase zuführbar sind. Die drei Zuleitungen 102 bis 104 münden in eine gemeinsame Kapillare 107, die über einen Aktuator in die offene Kopplung 101 hinein verfahrbar bzw. aus dieser herausfahrbar ist. Die weiteren Zuleitungen 105, 106 münden in eine gemeinsame Kapillare 108, die in derselben Weise wie die Kapillare 107 durch einen Aktuator axial verfahrbar ist.

Jede der Zuleitungen 102 bis 106 ist mit einem manuellen Regelventil 109, einer definierten Restriktion 110 und einem elektrisch geschalteten Ventil 111 versehen. Das jeweils aktive Referenzgas (oder die Referenzgase) wird über die Ventile 109 bzw. 111 vorselektiert und durch Hochfahren der Kapillare 107 bzw. 108 in eine Mischungszone 112 der offenen Kopplung 101 aktiviert. Fig. 13 zeigt die Kapillaren 107, 108 in ihrer Parkposition außerhalb der Mischungszone.

Durch die beschriebene Konstruktion ist es möglich zwei oder mehrere Referenzgase equilibriert zu halten und dann abwechselnd zuzuführen, z. B. bei Analyse von zwei oder mehr Elementen in einer Probe, ggf. nach einer (Gas-)Chromatographie. Andererseits kann bei Minimierung des Aufwands eine große oder fast beliebige Zahl von Referenzgasen automatisiert bereitgehalten werden.

In die offene Kopplung 101 tritt über eine Kapillare 113 Trägergas ein, in diesem Fall Helium. Hierfür ist eine Ventilanordnung entsprechend Fig. 12 vorgesehen. Die Kapillare 113 hat dann die Funktion der weiterführenden Leitung 97 in Fig. 12. Gemäß Fig. 13 ist die Trägergaszufuhr so ausgebildet, dass stets ein Minimum an Trägergas in die offene Kopplung 101 gelangt, so dass dieser stets gegen die Umgebung abgedichtet ist.

Die Probengase werden je nach der durch die hier nicht gezeigte Peripherie bereitgestellte Flussrate unterschiedlich zugeführt. Highflow (HF)-Proben werden über eine Kapillare 114 bis in eine Mischungszone 115 der offenen Kopplung 100 geführt.

Gezeigt sind hier zwei Zuleitungen 116, 117 für Highflow-Proben. Beide Zuleitungen münden in die Kapillare 114 und sind über Umschaltventile 118 schaltbar.

Lowflow (LF)-Proben werden in die offene Kopplung 100 von der Gegenseite (der Kapillare 114 gegenüberliegend) eingeführt. Eine von der offenen Kopplung 100 zum Massenspektrometer MS führende Kapillare 119 (Schnüffelleitung) ist durch einen Aktuator zwischen zwei Positionen verfahrbar, nämlich zwischen der Mischungszone 115 und einer Kapillare 120 für die Lowflow-Probe.

Die Kapillare 119 (Schnüffelleitung) ist auf dem Durchmesser der Kapillare 120 abgestimmt und kann (wie in Fig. 13 gezeigt) in die Kapillare 120 eintauchen. So gelangt der Probengasstrom praktisch vollständig in das Massenspektrometer. Dies ist bei besonders niedriger Flussrate der Probe vorteilhaft.

Wenn die Kapillare 119 nicht in der Kapillare 120 steckt, sondern stattdessen in die Mischungszone 50 verfahren ist, wird das über die Kapillare 120 im Gegenstrom in die offene Kopplung eintretende Probengas normal mit Trägergas verdünnt. Letzteres stammt aus der Zuleitung 80. In Fig. 13 gezeigt ist aber die in die Kapillare 120 eintauchende Kapillare 115, wie weiter oben erwähnt.

Sofern keine Peripherie zur Bereitstellung von Lowflow-Probengas vorhanden ist, kann stattdessen Trägergas über die Kapillare 120 zugeführt werden, etwa durch Verbindung eines Abzweigs 121 in der Zuleitung 80 mit der Kapillare 120.

Eine überschüssige Lowflow-Probe kann - z. B. wenn gerade eine Highflow-Probe gemessen wird - durch ein Entlüftungsventil 122 an der Kapillare 120 abgelassen werden.

Über die Kapillare 114 gelangen die Highflow-Proben je nach Stellung der Ventile 118 in die offene Kopplung 100. Die Ventile 118 sind hier als Drei-Wege-Ventile ausgeführt, so dass jeweils nicht benötigte Highflow-Probenströme abgesperrt und abgelassen (entlüftet) werden können. Dadurch bleibt der Gasstrom in der vorgeordneten, nicht gezeigten Peripherie konstant. Verfälschungen durch Diffusion werden so vermieden.

Nach Zusammenführung der Zuleitungen 116, 117 zu der Kapillare 114 weist diese einen Entlüftungszweig 123 auf, der mit einem eigenen Ventil 124 versehen ist. Der in die Kapillare 114 gelangende Gasstrom kann durch entsprechende Schaltung des Ventils 124 über den Entlüftungszweig 123 teilweise abgeführt werden, so dass in die offene Kopplung 100 ein reduzierter Gasstrom gelangt.

In der Mischungszone 115 wird der Probengasstrom durch den Trägergasstrom verdünnt und gelangt über die Kapillare 119 in das Massenspektrometer. Anstelle des Massenspektrometers kann auch ein anderer geeigneter Detektor vorgesehen sein.

Die Verdünnung des Probengasstroms wird über ein Regelung des Trägergasstroms gesteuert. Der Trägergasstrom gelangt über eine Kapillare 125 in die offene Kopplung 100. Zwischen Zuleitung 80 und Kapillare 125 sind hier mehrere Ventile 126 parallel zueinander angeordnet, nämlich drei Ventile 126 mit jeweils nachgeordneten Restriktionen 127, 128, 129, welche unterschiedlich ausgebildet sind. Durch Auswahl der einzelnen Ventile 126 bzw. Kombination derselben können in der Kapillare 125 die unterschiedlichsten Trägergasströme eingestellt werden. Eine durchgehende Zufuhr von der Zuleitung 80 in die Kapillare 125 ist nicht erforderlich, da Highflow-Peripherien häufig bereits einen Basisstrom oder ein eigenes Trägergas enthalten. Eine Computersteuerung der Ventile 126 trägt dafür Sorge, dass immer hinreichender Fluss in der offenen Kopplung 100 herrscht und damit kein Umgebungsgas einströmen kann.

Zwischen der Zuleitung 80 und der Kapillare 113 sind im vorliegenden Fall fünf zueinander parallele Ventile 127 angeordnet, die ebenso wie die Ventile 123 elektrisch schaltbar sind. Jedem Ventil 127 ist eine definierte Restriktion 131 bis 135 zugeordnet. Des Weiteren ist parallel zu den Ventilen 130 eine Leitung 136 ohne Ventil vorgesehen, über die ein Grundstrom an Trägergas stets in die offene Kopplung 101 einströmt. Auch die Leitung 136 weist eine definierte Restriktion 137 auf.

Die Restriktionen 131 bis 135 (analog dazu die Restriktionen 127 bis 129) sind gestuft ausgebildet, beispielsweise wie in Fig. 12 dargestellt oder z. B. in binären Schritten, nämlich mit jeweils zu verdoppelnden Flussraten (einfach, zweifach, vierfach, achtfach usw.). Von Restriktion zu Restriktion würde sich dann die Flussrate um den Faktor 2 erhöhen. Alternativ kann auch ein größerer Faktor verwendet werden, z. B. 2,5, so dass sich die Flussraten 1/2,5/6,25/15,625 usw. ergeben. Je höher der Faktor ist, um so weniger Ventile werden für einen hohen dynamischen Bereich benötigt, bei jedoch größer werdender Schrittweite. Die Umsetzung einer gewünschten Verdünnung der Referenzgase oder Probengase durch entsprechende Ansteuerung der Ventile 126, 130 erledigt eine rechnergesteuerte Kontrolleinheit, welche jeweils den nächstliegenden erzielbaren Verdünnungsschritt einstellt.

Um den Zufluss-Druck (Peripherie) konstant zu halten, kann eine gewisse Mindestströmung notwendig sein. Hier ist zu diesem Zweck die unbedingte Mindestversorgung über die Leitung 136 mit der Restriktion 137 vorgesehen. Stattdessen kann aber auch einfach nur eine Nebenbedingung in der Schaltungssteuerung vorgesehen sein, dass mindestens eines der Ventile 130 bzw. 126 offen sein muss oder eine zusätzliche Entlüftung vorgesehen ist, welche ggf. nur eingesetzt wird, wenn alle Flüsse in Richtung Zielstrom geschlossen sind.

Alle an die Zuleitung 80 anschließenden Restriktionen sind vorzugsweise aufeinander abgestimmt. Beispielsweise weisen die Restriktionen 129/128/127/131/132/133/134/135 und 137 Flussraten von 7/2/1/35/16/5/2/1 und 2 auf.

Das anhand der Fig. 12 bereits erläuterte Ventil 99 ist in Fig. 13 nicht gezeigt, kann aber gleichwohl vorgesehen sein, und dient auch als Entlüftung, wenn ein besonders schnelles Regelverhalten gewünscht wird und eine schnelle Reduktion des Drucks erzielt werden soll, oder bei Anschluss der weiterführenden Leitung 97 an ein eher geschlossenes System, welches einen Gegendruck aufbaut.

Die genannten Restriktionen 110, 127 bis 129 und 131 bis 137 können auf verschiedene Weise realisiert werden, beispielsweise durch gleichartige Kapillaren verschiedener Länge, durch verschiedene Öffnungen in einer Strömungsblende, durch definierte Querschnitte usw.

Die beschriebene Steuerung des Gasstroms für das Trägergas ist besonders vorteilhaft, wenn einmal eine bestimmte Konstellation der Ventile 126 bzw. 130 bzw. 89 bis 96 eingestellt wird und dann keine Regelung über Rückkopplung mehr erfolgt. Die gewünschte Flussrate liegt praktisch sofort an. Die Messungen werden nicht durch Nachregelprozesse gestört. Auch ergeben sich geringere Totvolumina als bei konventionellen Flussreglern. Ein Aufbau aus einfachen bekannten Bauteilen und auch aus inerten Materialien ist leicht möglich. Die Verwendung des durch die Ventile 89 bis 96, 126 und 130 binär oder inkrementell gestalteten Flussreglers ist gerade im Zusammenhang mit offenen Kopplungen besonders vorteilhaft, da hier sowohl der Vordruck (durch einen üblicherweise mechanischen Druckregler an der Trägergas-Versorgung) als auch der Zieldruck (durch die Exposition der offenen Kopplung an die Umgebung/Atmosphäre) konstant sind.

Die beschriebene binäre oder inkrementelle Flussregelung über die zueinander parallelen Ventile ist in Verbindung mit verschiedenen Geräten und Verfahren möglich, also nicht nur zur Verdünnung der Proben und Referenzen in der Isotopen-Massenspektrometrie, sondern z. B. auch in der Trägergas-Regelung für ICP-MS, in der Stoßgasregelung von Kollisions- und Reaktionszellen, usw.

Auch das Entlüftungsventil 122 und/oder das Ventil 124 im Entlüftungszweig 123 können rechnergesteuert geschaltet und mit den übrigen anhand der Fig. 13 erläuterten Teilen abgestimmt betätigt werden.

**Bezugszeichenliste**

| | | | |
|---|---|---|---|
| 20 | Reaktor | 49 | Kupplung |
| 21 | Gaschromatograph | 50 | Teiler |
| 22 | offene Kopplung | 51 | Zufuhrleitung |
| 23 | Ionenquelle | 52 | Zufuhrleitung |
| 24 | Ablenkeinheit | 53 | Falle |
| 25 | Detektorsystem | 54 | Referenzgaskapillare |
| 26 | Referenzgasquelle | 55 | Referenzgaskapillare |
| 27 | Trägergasquelle | 56 | Referenzgaskapillare |
| 28 | Probengaszufuhr | 57 | Referenzgaskapillare |
| 29 | Trägergaszufuhr | 58 | Trägergaskapillare |
| 30 | Referenzgaszufuhr | 59 | Trägergaskapillare |
| 31 | Probengaskapillare | 60 | Probengaskapillare |
| 32 | Trägergaskapillare | 61 | Probengaskapillare |
| 33 | Referenzgaskapillare | 62 | Probengaskapillare |
| 34 | Kapillare zur Ionenquelle | 63 | zur Ionenquelle führende Kapillare |
| 35 | Aktuator | | |
| 36 | Aktuator | 64 | Zufuhrleitung |
| 37 | Aktuator | 65 | Krimpstelle |
| 38 | Aktuator | 66 | Absperrventil |
| 39 | Ventil | 67 | Mischungszone |
| 40 | Ventil | 68 | Wartezone |
| 41 | Ventil | 69 | Übergangszone |
| 42 | Ventil | 70 | äußere Mischungsposition |
| 43 | Isötopen-Massenspektrometer | 71 | innere Mischungsposition |
| 44 | Gehäuse | 72 | Einlassbereich |
| 45 | Computer für elektrische Steuerung | 73 | äußere Warteposition |
| | | 74 | innere Warteposition |
| 46 | Detektor | 75 | Kurvenast |
| 47 | Kupplung | 76 | Kurvenast |
| 48 | Kupplung | | |
| 80 | Zuleitung | 114 | Kapillare |
| 81 | Nebenleitung | 115 | Mischungszone |
| 82 | Nebenleitung | 116 | Zuleitungen |
| 83 | Nebenleitung | 117 | Zuleitungen |
| 84 | Nebenleitung | 118 | Umschaltventile |
| 85 | Nebenleitung | 119 | Kapillare (Schnüffelleitung) |
| 86 | Nebenleitung | 120 | Kapillare (Lowflow) |
| 87 | Nebenleitung | 121 | Abzweig |
| 88 | Nebenleitung | 122 | Entlüftungsventil |
| 89 | Ventil | 123 | Entlüftungszweig |
| 90 | Ventil | 124 | Ventil |
| 91 | Ventil | 125 | Kapillare |
| 92 | Ventil | 126 | Ventile |
| 93 | Ventil | 127 | Restriktion |
| 94 | Ventil | 128 | Restriktion |
| 95 | Ventil | 129 | Restriktion |
| 96 | Ventil | 130 | Ventil |
| 97 | weiterführende Leitung | 131 | Restriktion |
| 98 | Rückspülleitung | 132 | Restriktion |
| 99 | Ventil | 133 | Restriktion |
| 100 | offene Kopplung | 134 | Restriktion |
| 101 | offene Kopplung | 135 | Restriktion |
| 102 | Zuleitung | 136 | Leitung |
| 103 | Zuleitung | 137 | Restriktion |
| 104 | Zuleitung | | |
| 105 | Zuleitung | | |
| 106 | Zuleitung | | |
| 107 | Kapillare | | |
| 108 | Kapillare | | |
| 109 | manuelles Regelventil | | |
| 110 | Restriktion | | |
| 111 | elektrisches Ventil | | |
| 112 | Mischungszone | | |
| 113 | Kapillare | | |

## Patentansprüche

1. Verfahren zur Analyse von Isotopenverhältnissen, wobei mindestens ein Probengas oder mindestens ein Referenzgas über mindestens eine offene Kopplung (22) mindestens einer Analyseeinrichtung zugeführt werden und zwar mit der Möglichkeit der Zugabe von Trägergas, **dadurch gekennzeichnet, dass** die Konzentration des in die Analyseeinrichtung gelangenden Probengases oder Referenzgases geregelt wird durch die Zufuhr des jeweiligen Trägergases, nämlich
- durch eine computergesteuerte Regelung mittels Rückkopplung anhand von Sensordaten oder
- durch eine automatische Anpassung der Signalintensitäten von Referenz und Probe durch eine computergesteuerte Regelung.

2. Verfahren nach Anspruch 1, **gekennzeichnet durch** eine stufenweise Änderung der Trägergaszufuhr, wobei auch zueinander parallele Trägergasteilströme gleicher oder unterschiedlicher Höhe aktivierbar und miteinander kombinierbar sind zur Einstellung eines resultierenden Trägergasstroms.

3. Verfahren nach Anspruch 1 oder 2, **dadurch gekennzeichnet, dass** die offene Kopplung (22) für mindestens eines der Gase - Probengas, Trägergas, Referenzgas - Kapillaren (31 - 33, 54 - 62) mit unterschiedlichen wirksamen Flussraten aufweist, und dass der Gasstrom geregelt wird durch Auswahl und Aktivierung der Kapillare mit der gewünschten Flussrate.

4. Verfahren nach Anspruch 1 oder 2, **dadurch gekennzeichnet, dass** die offene Kopplung (22) für mindestens eines der Gase - Probengas, Trägergas, Referenzgas - Kapillaren (31 - 33, 54 - 62)mit verschiedenen Querschnitten aufweist, und dass der Gasstrom geregelt wird durch Auswahl und Aktivierung der Kapillare mit dem gewünschten Querschnitt.

5. Verfahren nach Anspruch 1 oder einem der weiteren Ansprüche, **dadurch gekennzeichnet, dass** ausschließlich der Zufluss des jeweiligen Trägergases geregelt wird, während die übrigen Gasströme ungeregelt bleiben.

6. Verfahren nach Anspruch 1 oder einem der weiteren Ansprüche, **dadurch gekennzeichnet, dass** der Zufluss des jeweiligen Trägergases so geregelt wird, dass die Konzentration des Probengases und/oder Referenzgases im Wesentlich konstant, zumindest in einem für die Analyseeinrichtung optimalen Messbereich bleibt.

7. Verfahren nach Anspruch 1 oder einem der weiteren Ansprüche, **dadurch gekennzeichnet, dass** der Zufluss des jeweiligen Trägergases während einer kontinuierlichen alternierenden Messung so geregelt wird, dass Probengas und Referenzgas in der Analyseeinrichtung Signale von im Wesentlichen gleicher Intensität liefern.

8. Verfahren nach Anspruch 1 oder einem der weiteren Ansprüche, **dadurch gekennzeichnet, dass** die Konzentration des Probengases aus einer von der Analyseeinrichtung durchgeführten Messung abgeleitet und das Ergebnis der Messung für die Zuflussregelung des jeweiligen Trägergases verwendet wird.

9. Verfahren nach Anspruch 1 oder einem der weiteren Ansprüche, **dadurch gekennzeichnet, dass** die Konzentration des Probengases aus einer Konzentrationsmessung vor Eintritt des Probengases in die Analyseeinrichtung, insbesondere vor Eintritt in die offene Kopplung (22) abgeleitet und das Ergebnis der Messung für die Zuflussregelung des jeweiligen Trägergases verwendet wird.

10. Verfahren nach Anspruch 1 oder einem der weiteren Ansprüche, **dadurch gekennzeichnet, dass** die Konzentration des Probengases aus der thermischen Leitfähigkeit abgeleitet wird.

11. Verfahren nach Anspruch 1 oder einem der weiteren Ansprüche, **dadurch gekennzeichnet, dass** die Probengase der offenen Kopplung (22) kontinuierlich alternierend mit Referenzgasen aus einer Referenzgasquelle (26) zugeführt werden.

12. Verfahren nach Anspruch 1 oder einem der weiteren Ansprüche, **dadurch gekennzeichnet, dass** der offenen Kopplung (22) ein Gaschromatograph (21) vorgeordnet ist, wobei das austretende Gas als Probengas der offenen Kopplung zugeführt wird.

13. Verfahren nach Anspruch 1 oder einem der weiteren Ansprüche, **dadurch gekennzeichnet, dass** das Probengas vor Eintritt in die offene Kopplung (22) geteilt wird auf zwei oder mehr Teilgasströme, die der offenen Kopplung zugeführt werden.

14. Verfahren nach Anspruch 13, **dadurch gekennzeichnet, dass** mindestens einer der Teilgasströme vor Eintritt in die offene Kopplung (22) physikalisch oder chemisch verändert wird.

15. Verfahren nach Anspruch 13 oder 14, **dadurch gekennzeichnet, dass** mindestens einer der Teilgasströme vor Eintritt in die offene Kopplung (22) durch eine Falle (53) geleitet wird, so dass eine in diesem Teilgasstrom enthaltene Komponente/Substanz zumindest teilweise zurückgehalten wird.

16. Verfahren nach Anspruch 1 oder einem der weiteren Ansprüche, **dadurch gekennzeichnet, dass** das Probengas bzw. die Probengase leichte bis mittelschwere Elemente oder Verbindungen derselben, insbesondere H2, CO2 und/oder N2 enthalten und in der Analyseeinrichtung die Verbindungen oder Elemente analysiert werden.

17. Verfahren nach Anspruch 1 oder einem der weiteren Ansprüche, **dadurch gekennzeichnet, dass** das Probengas über eine andere offene Kopplung (100, 101) zugeführt wird als das Referenzgas.

18. Verfahren nach Anspruch 17, **dadurch gekennzeichnet, dass** die Zufuhr von Trägergas in mindestens eine der beiden offenen Kopplungen (100, 101) geregelt wird durch Aufteilung des Trägergasstroms auf mehrere parallele Teilgasströme, von denen einer oder mehrere ausgewählt und der offenen Kopplung zugeführt werden.

19. Verfahren nach Anspruch 18, **dadurch gekennzeichnet, dass** einige oder alle parallelen Teilgasströme unterschiedlich groß sind.

20. Verfahren nach Anspruch 17 oder einem der weiteren Ansprüche, **dadurch gekennzeichnet, dass** das Probengas vor der Zufuhr in die offene Kopplung (100) aufgeteilt wird in einen zur offenen Kopplung führenden Strom und einen hiervon abgeteilten Strom der nicht der offenen Kopplung zugeführt wird.

21. Verfahren nach Anspruch 1 oder einem der weiteren Ansprüche, **dadurch gekennzeichnet, dass** die Analyseeinrichtung ein für die Isotopenverhältnismessung geeignetes Massenspektrometer (43) ist.

## Claims

1. Method for the analysis of isotope ratios, wherein at least one sample gas or at least one reference gas are supplied to at least one analytical device via at least one open split (22), the addition of a carrier gas also being possible, **characterized in that** the concentration of the sample gas or reference gas passing into the analytical device is controlled by the supply of the respective carrier gas, namely
- by computer-controlled control by way of feedback on the basis of sensor data or
- by automatic adaptation of the signal intensities of reference and sample by a computer-controlled control system.

2. Method according to Claim 1, **characterized by** a step-by-step change of the carrier gas supply, wherein mutually parallel carrier gas part-streams of equal or different amplitude can also be activated and combined with one another for adjusting a resultant carrier gas stream.

3. Method according to Claim 1 or 2, **characterized in that** the open split (22) has capillaries (31-33, 54-62) with different effective flow rates for at least one of the gases - sample gas, carrier gas, reference gas - and **in that** the gas stream is controlled by selection and activation of the capillaries with the desired flow rate.

4. Method according to Claim 1 or 2, **characterized in that** the open split (22) has for at least one of the gases - sample gas, carrier gas, reference gas-capillaries (31-33, 54-62) having different cross sections, and **in that** the gas stream is controlled by selection and activation of the capillaries having the desired cross section.

5. Method according to Claim 1 or one of the further claims, **characterized in that** only the inflow of the respective carrier gas is controlled whilst the remaining gas streams remain uncontrolled.

6. Method according to Claim 1 or one of the further claims, **characterized in that** the inflow of the respective carrier gas is controlled in such a manner that the concentration of the sample gas and/or reference gas remains essentially constant, at least within a measuring range which is optimum for the analytical device.

7. Method according to Claim 1 or one of the further claims, **characterized in that** the inflow of the respective carrier gas during a continuous alternating measurement is controlled in such a manner that sample gas and reference gas supply signals of essentially equal intensity in the analytical device.

8. Method according to Claim 1 or one of the further claims, **characterized in that** the concentration of the sample gas is derived from a measurement performed by the analytical device and the result of the measurement is used for controlling the inflow of the respective carrier gas.

9. Method according to Claim 1 or one of the further claims, **characterized in that** the concentration of the sample gas is derived from a concentration measurement before entry of the sample gas into the analytical device, particularly before entry into the open split (22), and the result of the measurement is used for controlling the inflow of the respective carrier gas.

10. Method according to Claim 1 or one of the further claims, **characterized in that** the concentration of the sample gas is derived from the thermal conductivity.

11. Method according to Claim 1 or one of the further claims, **characterized in that** the sample gases are continuously supplied, alternating with reference gases from a reference gas source (26), to the open split (22).

12. Method according to Claim 1 or one of the further claims, **characterized in that** the open split (22) is preceded by a gas chromatograph (21), the emerging gas being supplied as sample gas to the open split.

13. Method according to Claim 1 or one of the further claims, **characterized in that** the sample gas, before entry into the open split (22), is divided into two or more part-gas streams which are supplied to the open split.

14. Method according to Claim 13, **characterized in that** at least one of the part-gas streams is physically or chemically changed before entry into the open split (22).

15. Method according to Claim 13 or 14, **characterized in that** at least one of the part-gas streams, before entry into the open split (22), is conducted through a trap (53) so that a component/substance contained in this part-gas stream is held back at least partially.

16. Method according to Claim 1 or one of the further claims, **characterized in that** the sample gas or the sample gases, respectively, contain light-weight to medium-heavy elements or compounds of these, particularly N₂, CO₂ and/or N₂, and the compounds or elements are analyzed in the analytical device.

17. Method according to Claim 1 or one of the further claims, **characterized in that** the sample gas is supplied via a different open split (100, 101) than the reference gas.

18. Method according to Claim 17, **characterized in that** the supply of carrier gas into at least one of the two open splits (100, 101) is controlled by dividing the carrier gas stream into several parallel part-gas streams, of which one or more are selected and supplied to the open split.

19. Method according to Claim 18, **characterized in that** some or all parallel part-gas streams are of different magnitude.

20. Method according to Claim 17 or one of the further claims, **characterized in that** the sample gas, before being supplied into the open split (100), is divided into a stream leading to the open split and a stream, separated therefrom, which is not supplied to the open split.

21. Method according to Claim 1 or one of the further claims, **characterized in that** the analytical device is a mass spectrometer (43) suitable for measuring isotope ratios.

## Revendications

1. Procédé d'analyse de rapports d'isotopes, dans lequel au moins un gaz échantillon ou au moins un gaz de référence sont acheminés, par l'intermédiaire d'au moins un raccord ouvert (22), vers au moins un dispositif d'analyse, avec la possibilité d'alimentation d'un gaz porteur, **caractérisé en ce que** la concentration du gaz échantillon ou du gaz de référence alimentant le dispositif d'analyse est régulée par l'alimentation du gaz porteur respectif, à savoir
- par une régulation commandée par ordinateur au moyen d'une rétroaction ayant pour base des données de capteur, ou
- par une adaptation automatique des intensités de signaux de la référence et de l'échantillon par une régulation commandée par ordinateur.

2. Procédé selon la revendication 1, **caractérisé par** une modification pas à pas de l'alimentation en gaz porteur, dans lequel des flux partiels de gaz porteurs parallèles les uns aux autres et d'intensités identiques ou différentes peuvent être activés et combinés les uns aux autres pour régler un flux gazeux porteur qui en résulte.

3. Procédé selon la revendication 1 ou 2, **caractérisé en ce que** le raccord ouvert (22) destiné à au moins l'un des gaz, c'est-à-dire au gaz échantillon, au gaz porteur et au gaz de référence, comporte des capillaires (31-33, 54-62) ayant des débits effectifs différents, et **en ce que** le flux gazeux est régulé par sélection et activation des capillaires ayant les débits souhaités.

4. Procédé selon la revendication 1 ou 2, **caractérisé en ce que** le raccord ouvert (22) destiné à au moins l'un des gaz, c'est-à-dire au gaz échantillon, au gaz porteur et au gaz de référence, comporte des capillaires (31-33, 54-62) ayant des sections transversales différentes, et **en ce que** le flux gazeux est régulé par sélection et activation des capillaires ayant la section transversale souhaitée.

5. Procédé selon la revendication 1 ou l'une quelconque des autres revendications, **caractérisé en ce que** seul le flux d'alimentation du gaz porteur respectif est régulé alors que les autres flux gazeux restent non régulés.

6. Procédé selon la revendication 1 ou l'une quelconque des autres revendications, **caractérisé en ce que** le flux d'alimentation du gaz porteur respectif est régulé de manière à ce que la concentration du gaz échantillon et/ou du gaz de référence reste sensiblement constante, au moins dans une zone de mesure optimale du dispositif d'analyse.

7. Procédé selon la revendication 1 ou l'une quelconque des autres revendications, **caractérisé en ce que** le flux d'alimentation du gaz porteur respectif est régulé pendant une mesure alternant en continu de manière à ce que le gaz échantillon et le gaz de référence délivrent des signaux d'intensité sensiblement constante dans le dispositif d'analyse.

8. Procédé selon la revendication 1 ou l'une quelconque des autres revendications, **caractérisé en ce que** la concentration du gaz échantillon est déduite à partir d'une mesure réalisée par le dispositif d'analyse et **en ce que** le résultat de la mesure est utilisé pour la régulation du débit d'alimentation du gaz porteur respectif.

9. Procédé selon la revendication 1 ou l'une quelconque des autres revendications, **caractérisé en ce que** la concentration du gaz échantillon est déduite à partir d'une mesure de concentration effectuée avant l'introduction du gaz échantillon dans le dispositif d'analyse, en particulier avant son introduction dans le raccord ouvert (22), et **en ce que** le résultat de la mesure est utilisé pour la régulation du débit d'alimentation du gaz porteur respectif.

10. Procédé selon la revendication 1 ou l'une quelconque des autres revendications, **caractérisé en ce que** la concentration du gaz échantillon est déduite à partir de la conductivité thermique.

11. Procédé selon la revendication 1 ou l'une quelconque des autres revendications, **caractérisé en ce que** les gaz échantillons sont acheminés de manière continument alternée vers le raccord ouvert (22) avec des gaz de référence provenant d'une source de gaz de référence (26).

12. Procédé selon la revendication 1 ou l'une quelconque des autres revendications, **caractérisé en ce que** le raccord ouvert (22) est disposé en amont d'un chromatographe en phase gazeuse (21), dans lequel le gaz de sortie est acheminé vers le raccord ouvert en tant que gaz échantillon.

13. Procédé selon la revendication 1 ou l'une quelconque des autres revendications, **caractérisé en ce que** le gaz échantillon est divisé avant son introduction dans le raccord ouvert (22) en deux ou plusieurs flux gazeux partiels qui sont acheminés vers le raccord ouvert.

14. Procédé selon la revendication 13, **caractérisé en ce qu'**au moins l'un des flux gazeux est modifié physiquement ou chimiquement avant son introduction dans le raccord ouvert (22).

15. Procédé selon la revendication 13 ou 14, **caractérisé en ce qu'**au moins l'un des flux gazeux est divisé avant son introduction dans le raccord ouvert (22) par un piège (53) de manière à ce qu'un constituant/une substance contenu(e) dans ledit flux gazeux partiel soit au moins partiellement retenu(e).

16. Procédé selon la revendication 1 ou l'une quelconque des autres revendications, **caractérisé en ce que** le gaz échantillon ou les gaz échantillons contient/contiennent des éléments légers ou de masse moyenne ou des composés de ceux-ci, notamment du H2, du CO2 et/ou du N2, et **en ce que** les composés ou les éléments sont analysés dans le dispositif d'analyse.

17. Procédé selon la revendication 1 ou l'une quelconque des autres revendications, **caractérisé en ce que** le gaz échantillon est acheminé en tant que gaz de référence par l'intermédiaire d'un autre raccord ouvert (100, 101).

18. Procédé selon la revendication 17, **caractérisé en ce que** l'alimentation en gaz porteur est régulée dans au moins l'un des deux raccords ouverts (100, 101) par subdivision du flux gazeux porteur en plusieurs flux gazeux partiels parallèles, dont un ou plusieurs est/sont sélectionné (s) et acheminé(s) vers le raccord ouvert.

19. Procédé selon la revendication 18, **caractérisé en ce que** certains ou la totalité des flux gazeux partiels parallèles ont des intensités différentes.

20. Procédé selon la revendication 17 ou l'une quelconque des autres revendications, **caractérisé en ce que** le gaz échantillon est subdivisé avant son introduction dans le raccord ouvert (100) en un flux conduisant au raccord ouvert et en un flux séparé de celui-ci qui ne conduit pas au raccord ouvert.

21. Procédé selon la revendication 1, ou l'une quelconque des autres revendications, **caractérisé en ce que** le dispositif d'analyse est un spectromètre de masse (43) approprié pour la mesure des rapports d'isotopes.
